# NEUE EUROPÄISCHE PATENTSCHRIFT

(11) **EP 1 557 299 B2**
(45) Veröffentlichungstag und Bekanntmachung des Hinweises auf die Entscheidung über den Einspruch: **30.04.2014**
(45) Hinweis auf die Patenterteilung: 05.03.2008
(21) Anmeldenummer: 05001065.1
(22) Anmeldetag: 20.01.2005
(51) Int. Cl.: B60D 1/54

(54) **Anhängekupplung**
Trailer coupling
Attelage de remorque

(30) Priorität: 22.01.2004 DE 102004004501
(43) Veröffentlichungstag der Anmeldung: 27.07.2005
(73) Patentinhaber: SCAMBIA Industrial Developments Aktiengesellschaft, 9494 Schaan (LI)
(72) Erfinder: Rimmelspacher, Bernhard, 76287 Rheinstetten (DE); Gentner, Wolfgang, 71254 Ditzingen (DE); Riehle, Jörg, 71679 Asperg (DE); Mayer, Günther, 74357 Bönnigheim (DE); Beringer, Hans-Peter, 73734 Esslingen (DE); Urban, Ralph, 71638 Ludwigsburg (DE)
(74) Vertreter: Hoeger, Stellrecht & Partner Patentanwälte

(56) Entgegenhaltungen:
- EP-A- 1 182 062
- EP-A1- 1 533 149
- WO-A-02/36370
- WO-A-03/072375
- DE-A1- 10 045 296
- DE-A1- 19 612 959
- DE-U1- 29 903 499
- US-A- 5 133 572
- US-A1- 2003 094 786

## Beschreibung

Die Erfindung betrifft eine Anhängekupplung für Kraftfahrzeuge, umfassend ein fahrzeugfestes Lagerelement, ein gegenüber dem fahrzeugfesten Lagerelement von einer Arbeitsstellung in eine Ruhestellung und umgekehrt bewegbares Anhängeelement, welches eine Kupplungskugel und einen die Kupplungskugel an einem ersten Ende tragenden Kugelhals umfaßt, und eine eine Fixierstellung und eine Freigabestellung aufweisende Fixiereinrichtung, mit welcher das bewegbare Anhängeelement mindestens in der Arbeitsstellung durch die Fixierstellung an dem Lagerelement festlegbar ist.

Derartige Anhängekupplungen sind beispielsweise aus der DE 196 12 959 bekannt.

Bei diesen Anhängekupplungen ist das Anhängeelement um eine schräg im Raum stehende Schwenkachse gegenüber dem Lagerelement verschwenkbar.

Eine derartige Verschwenkbarkeit um eine einzige Achse bedingt gewisse Raumverhältnisse, die nicht an jedem Kraftfahrzeug gegeben sind.

Der Erfindung liegt daher die Aufgabe zugrunde, eine Anhängekupplung für Kraftfahrzeuge derart zu verbessern, daß diese in einfacher Weise bei den unterschiedlichsten Raumverhältnissen einsetzbar ist.

Diese Aufgabe wird bei einer Anhängekupplung der eingangs beschriebenen Art erfindungsgemäß dadurch gelöst, daß das Anhängeelement in der Freigabestellung mittels eines dreiachsig schwenkbaren Gelenks gelenkig mit dem Lagerelement verbunden ist, daß das dreiachsig schwenkbare Gelenk ein Kugelgelenk ist und daß das Kugelgelenk eine von einem der Elemente umfaßte Gelenkkugel und eine vom anderen der Elemente umfaßte, die Gelenkkugel aufnehmende Gelenkpfanne aufweist, und dass das Kugelgelenk in der Fixierstellung durch Anhängelasten bedingte Kräfte aufnimmt und diese auf das Lagerelement überträgt.

Durch das dreiachsig schwenkbare Gelenk steht eine Vielzahl von Schwenkbewegungen zur Verfügung, um das Anhängeelement von der Arbeitsstellung in die Ruhestellung und umgekehrt zu bewegen, insbesondere unter einer Unterkante eines Stoßfängers in geeigneter Weise hindurchzubewegen und in geeigneter Weise in einem Ruhestellungsraum zu positionieren.

Ein derartiges Kugelgelenk ist in der Lage, in der Fixierstellung auch durch Anhängelasten bedingte Kräfte aufzunehmen und diese Kräfte auf das Lagerelement zu übertragen, ohne daß konstruktive Probleme im Hinblick auf eine ausreichend große Stabilität auftreten.

Eine besonders günstige Ausführung des Kugelgelenks sieht vor, daß die Gelenkpfanne die Gelenkkugel über einen mehr als einer Halbkugel entsprechenden Oberflächenbereich übergreift und somit die Gelenkkugel mit ausreichend großer Stabilität aufnehmen kann.

Um eine ausreichende Schwenkbarkeit der Gelenkkugel relativ zur Gelenkpfanne zu gewährleisten, ist vorzugsweise vorgesehen, daß die Gelenkpfanne eine Öffnung aufweist, aus welcher die Gelenkkugel mit einer Kugelkappenfläche frei übersteht und somit ausreichend bewegbar ist.

Um die Gelenkkugel bei der Herstellung in einfacher Weise und zuverlässig zu positionieren, ist vorzugsweise vorgesehen, daß die Gelenkpfanne aus mindestens zwei Teilkörpern zusammengesetzt ist.

Bei der Ausbildung des Kugelgelenks und der Zuordnung von dessen Elementen zu dem Lagerelement und dem Anhängeelement bestehen zwei grundsätzlich unterschiedliche Möglichkeiten.

So sieht eine vorteilhafte Lösung vor, daß die Gelenkpfanne von dem Lagerelement umfaßt ist und daß die Gelenkkugel von dem Anhängeelement umfaßt ist.

In diesem Fall ist es günstig, wenn die Gelenkkugel an einem zweiten Ende des Kugelhalses angeordnet ist.

Eine besonders stabile Verbindung zwischen Kugelhals und Gelenkkugel ergibt sich dann, wenn die Gelenkkugel einstückig an den Kugelhals angeformt ist.

Eine andere zweckmäßige Lösung sieht vor, daß die Gelenkpfanne von dem Anhängeelement umfaßt ist und daß die Gelenkkugel von dem Lagerelement umfaßt ist.

In diesem Fall ist zweckmäßigerweise vorgesehen, daß zumindest ein Teil der Gelenkpfanne einstückig an den Kugelhals angeformt ist.

Ferner ist zum Halten der Gelenkkugel vorzugsweise vorgesehen, daß das Lagerelement einen Fortsatz aufweist, an welchem die Gelenkkugel angeordnet ist.

Vorzugsweise ist dabei die Gelenkkugel einstückig an den Fortsatz angeformt.

Hinsichtlich der Ausbildung der Fixiereinrichtung wurden bislang keine näheren Angaben gemacht. So sieht eine vorteilhafte Lösung vor, daß mit der Fixiereinrichtung in der Fixierstellung das dreiachsige Gelenk gegen eine Schwenkbewegung in allen Achsrichtungen fixierbar ist.

Zweckmäßigerweise ist hierzu die Fixiereinrichtung mit einem blockierend wirkenden Verkeilelement versehen.

Ein derartiges Verkeilelement kann grundsätzlich auf die unterschiedlichsten Arten wirksam sein.

Eine zweckmäßige Ausführungsform sieht vor, daß das Verkeilelement eine erste Verkeilflächenanordnung eines ersten Verkeilflächensatzes aufweist und an einem der Elemente gelagert ist und daß das andere der Elemente eine zweite Verkeilflächenanordnung des ersten Verkeilflächensatzes trägt.

Mit einem derartigen Konzept läßt sich das andere der Elemente relativ zum einen der Elemente fixieren.

Allerdings müssen in diesem Fall die auf das Verkeilelement wirkenden Kräfte durch das Verkeilelement selbst übertragen werden.

Aus diesem Grund ist bei einem weiteren vorteilhaften Ausführungsbeispiel vorgesehen, daß das Verkeilelement mit mindestens einer ersten Verkeilflächenanordnung eines zweiten Verkeilflächensatzes versehen ist und daß das eine der Elemente mindestens eine zweite Verkeilflächenanordnung des zweiten Verkeilflächensatzes trägt. Somit besteht die Möglichkeit, über den zweiten Verkeilflächensatz die auf das Verkeilelement wirkenden Kräfte unmittelbar auf das eine der Elemente überzuleiten.

Um eine vorteilhafte Blockierwirkung des Verkeilelements zu erreichen, ist vorzugsweise vorgesehen, daß jeder Verkeilflächensatz in mindestens einer quer zu einer Einfahrrichtung des Keilelements verlaufenden Querrichtung verkeilend zur Wirkung bringbar ist.

Vorzugsweise ist dabei vorgesehen, daß jeder Verkeilflächensatz eine mit zunehmender Erstreckung in Einfahrrichtung in der Querrichtung einen zunehmend gering werdenden Abstand von der Einfahrrichtung aufweisende Keilfläche umfaßt.

Besonders günstig ist es, wenn jeder Verkeilflächensatz zwei aneinander flächig zur Anlage bringbare Keilflächen umfaßt.

Bei den bisher erläuterten Ausführungsbeispielen wurde lediglich von einer Blockierwirkung des Verkeilelements im Hinblick auf das dreiachsig schwenkbare Gelenk gesprochen.

Für einen möglichst verschleißfreien Betrieb der Anhängekupplung ist es besonders günstig, wenn durch das Verkeilelement das dreiachsig schwenkbare Gelenk spielfrei verkeilbar ist, so daß dadurch spielbedingter Verschleiß des dreiachsig schwenkbaren Gelenks im Anhängebetrieb vermieden werden kann.

Besonders zweckmäßig läßt sich dies dann realisieren, wenn jeder Verkeilflächensatz in mindestens zwei quer zur Einfahrrichtung des Verkeilelements und quer zueinander verlaufenden Querrichtungen verkeilend wirksam ist.

Zweckmäßigerweise liegen die Querrichtungen so, daß sie eine Komponente in Richtung einer Relativbewegungsrichtung der Elemente im Bereich der Keilflächenanordnungen aufweisen.

Ferner ist vorzugsweise vorgesehen, daß eine der beiden Querrichtungen eine Komponente in Richtung senkrecht zu einer Relativbewegungsrichtung der Elemente im Bereich der Keilflächenanordnungen aufweist.

Um derartige Kräfte in den Querrichtungen zu erreichen, ist zweckmäßigerweise vorgesehen, daß jeder Keilflächensatz mindestens zwei in den unterschiedlichen Querrichtungen eine mit zunehmender Erstreckung in Einfahrrichtung zunehmend geringer werdenden Abstand von der Einfahrrichtung aufweisende Keilflächen umfaßt.

Hinsichtlich des Ortes, an welchem das Verkeilelement wirksam sein soll, wurden im Zusammenhang mit der erfindungsgemäßen Lösung keine näheren Angaben gemacht.

So sieht ein vorteilhaftes Ausführungsbeispiel vor, daß das Verkeilelement auf einen in der Kugelpfanne liegenden Bereich der Gelenkkugel wirkt. Diese Lösung hat den Vorteil, daß der in der Gelenkpfanne liegende Bereich der Gelenkkugel stets gegen Schmutzeinwirkung von außen geschützt ist und somit in einfacher Weise eine schmutzunanfällige Wirkungsweise des Verkeilelements realisiert werden kann.

Besonders zweckmäßig ist es dabei, wenn das Verkeilelement zwischen der Gelenkkugel und der Gelenkpfanne zur Wirkung bringbar ist.

In diesem Fall ist es beispielsweise denkbar, daß der erste Verkeilflächensatz zwischen dem Verkeilelement und der Gelenkkugel wirksam ist.

Ferner ist es zum Erreichen einer unmittelbaren Abstützung des Verkeilelements günstig, wenn der zweite Verkeilflächensatz zwischen dem Verkeilelement und der Gelenkpfanne wirksam ist.

Besonders vorteilhaft ist die Wirkung des Verkeilelements dann, wenn dieses eine Bewegung einer Kugelaußenfläche der Gelenkkugel relativ zu einer Kugelinnenfläche der Gelenkpfanne in allen Flächenrichtungen blockiert.

Zum Blockieren der Gelenkkugel ist es besonders günstig, wenn das Verkeilelement mit seiner Einfahrrichtung, welche ungefähr parallel zu einer Tangentialrichtung in einem Berührungspunkt der Kugelaußenfläche der Gelenkkugel verläuft, in die Verkeilstellung einfahrbar ist.

Insbesondere ist hierzu vorgesehen, daß das Verkeilelement in eine die Gelenkkugel ungefähr parallel zu einer Tangentialrichtung schneidende Ausnehmung eingreift.

Vorzugsweise ist dabei die Ausnehmung so ausgebildet, daß sie Wandflächen aufweist, welche die zweite Verkeilflächenanordnung des ersten Verkeilflächensatzes bilden.

Ferner ist es ebenfalls günstig, wenn die Gelenkpfanne eine Ausnehmung aufweist, welche die Kugelinnenfläche auf gegenüberliegenden Seiten durchstößt.

Zweckmäßigerweise sind die Ausnehmungen so ausgebildet, daß sie zwischen den Durchstoßstellen gegenüber der Kugelinnenfläche vertieft verläuft.

Besonders günstig ist es hierbei, wenn die Ausnehmung die zweite Verkeilflächenanordnung des zweiten Verkeilflächensatzes bildet.

Eine andere Möglichkeit, das Verkeilelement zum Einsatz zu bringen ist die, daß das die Gelenkpfanne bildende Gehäuse einen Gehäuseansatz aufweist, welcher mit dem die Gelenkkugel tragenden Element bei wirksamer Fixiereinrichtung durch das Verkeilelement in Anlage bringbar ist.

Zweckmäßigerweise ist dabei das Keilelement so ausgebildet, daß es derart wirkt, daß das Verkeilelement den Gehäuseansatz und das andere Element gegeneinander beaufschlagt.

Vorzugsweise wirkt dabei das Verkeilelement auf den Gehäuseansatz und ist an dem anderen Element gelagert.

Hinsichtlich der Anordnung des Verkeilelements an dem jeweiligen Element, das heißt dem Lagerelement oder dem Anhängeelement der Anhängekupplung, wurden bislang keine näheren Angaben gemacht. Aus Gründen einer einfachen Betätigbarkeit des Verkeilelements hat es sich als besonders zweckmäßig erwiesen, wenn das Verkeilelement an dem Lagerelement gelagert ist und gegenüber diesem zwischen einer Verkeilstellung und einer Freigabestellung bewegbar ist.

Ferner wurden hinsichtlich der möglichen Bewegungsarten des Verkeilelements ebenfalls keine näheren Angaben gemacht.

So sieht eine günstige Lösung vor, daß das Verkeilelement durch eine lineare Verschiebebewegung zwischen der Verkeilstellung und der Freigabestellung bewegbar ist.

Eine alternative Lösung sieht vor, daß das Verkeilelement durch eine Drehbewegung zwischen der Verkeilstellung und der Freigabestellung bewegbar ist.

Hinsichtlich des Antriebs des Verkeilelements wurden bislang keine näheren Angaben gemacht. So sieht eine vorteilhafte Lösung vor, daß das Verkeilelement durch eine Antriebseinrichtung in der Einfahrrichtung in die Verkeilstellung bewegbar ist.

Zweckmäßigerweise ist die Antriebseinrichtung so konzipiert, daß sie einen elastischen Kraftspeicher aufweist, welcher das Verkeilelement in der Einfahrrichtung beaufschlagt.

Insbesondere erfolgt ein derartiges Beaufschlagen des Verkeilelements durch den elastischen Kraftspeicher auch noch in der Verkeilstellung, so daß das Verkeilelement nicht nur das dreiachsig schwenkbare Gelenk spielfrei verkeilt, sondern auch bei eintretendem Verschleiß sich nachstellend stets erneut in eine spielfreie Verkeilstellung bewegt und somit die spielfreie Verkeilstellung nachstellend aufrecht erhält.

Hinsichtlich der Ausbildung der Antriebseinrichtung im einzelnen sind unterschiedlichste Möglichkeiten denkbar. Eine konstruktiv besonders einfache Lösung sieht vor, daß die Antriebseinrichtung einen durch den federelastischen Kraftspeicher beaufschlagten und auf das Verkeilelement wirkenden Antriebsstößel aufweist, welcher in einem Gehäuse geführt ist.

Zur weiteren Sicherung des Antriebsstößels ist vorgesehen, daß ein gegenüber diesem federbeaufschlagt angeordneter Sicherungsstößel vorgesehen ist.

Der Sicherungsstößel dient vorzugsweise dazu, daß mit diesem die Position von mindestens einem in einer Aufnahme im Antriebsstößel angeordneten Sicherungskörper festlegbar ist.

Zweckmäßigerweise ist hierzu vorgesehen, daß in einer Sicherungsstellung des Sicherungsstößels der mindestens eine Sicherungskörper radial über den Antriebsstößel überstehen und eine an dem Gehäuse vorgesehene Sicherungsflächen hintergreift.

Ferner ist der Sicherungsstößel so ausgebildet, daß in der Entsicherungsstellung des Sicherungsstößels der mindestens eine Sicherungskörper nicht in Eingriff mit den Sicherungsflächen steht.

Hierzu ist vorzugsweise vorgesehen, daß der Sicherungsstößel eine Ausnehmung aufweist, in welche der mindestens eine Sicherungskörper in der Entsicherungsstellung eintritt.

Besonders zweckmäßig ist es hierbei, wenn der mindestens eine Sicherungskörper in der Sicherungsstellung des Sicherungsstößels auf schrägen Sicherungsflächen aufliegt, welche über die Sicherungskörper zu einer Kraftwirkung auf den Antriebsstößel in der Einfahrrichtung führen, so daß der mindestens eine Sicherungskörper in der Sicherungsstellung noch zusätzlich zum Verschieben des Antriebsstößels in der Einfahrrichtung beiträgt.

Dies läßt sich beispielsweise dadurch realisieren, daß der Sicherungsstößel den mindestens einen Sicherungskörper in seiner Sicherungsstellung mit einer in Richtung der Sicherungsfläche wirksamen Keilfläche beaufschlagt.

Vorzugsweise ist hierbei der Keilwinkel der Keilfläche kleiner als ein Keilwinkel der Selbsthemmung.

Um zu erreichen, daß der Sicherungsstößel ständig wirksam ist, ist vorgesehen, daß der Sicherungsstößel relativ zum Antriebsstößel mit einem federelastischen Kraftspeicher in Richtung seiner zur Sicherungsstellung des mindestens einen Sicherungskörpers führenden Stellung beaufschlagt ist.

Bei all den Ausführungsformen der erfindungsgemäßen Antriebseinrichtung, bei welcher diese mit dem elastischen Kraftspeicher den Antriebsstößel beaufschlagt, ist es erforderlich, dem elastischen Kraftspeicher entgegenzuwirken.

Hierzu sieht eine vorteilhafte Ausführungsform vor, daß die Antriebseinrichtung mit einer Betätigungseinrichtung gekoppelt ist, mit welcher dem auf den Antriebsstößel wirkenden elastischen Kraftspeicher entgegengewirkt werden kann.

Hierbei ist es besonders günstig, wenn die Betätigungseinrichtung auf den Sicherungsstößel wirkt.

Zweckmäßigerweise ist es dabei günstig, wenn der Sicherungsstößel bei Erreichen einer einer Entsicherungsstellung des mindestens einen Sicherungskörpers entsprechenden Stellung auf den Antriebsstößel wirkt, um diesen entgegengesetzt zur Wirkung des elastischen Kraftspeichers auf diesen zu bewegen.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: einen Längsschnitt durch ein schematisch dargestelltes Kraftfahrzeug mit an diesem montiertem ersten Ausführungsbeispiel einer erfindungsgemäßen Anhängekupplung;
- Fig. 2: eine Draufsicht in Richtung des Pfeils H in Fig. 1;
- Fig. 3: eine perspektivische Darstellung verschiedener Schwenkstellungen eines Anhängeelements der erfindungsgemäßen Anhängekupplung;
- Fig. 4: eine vergrößerte Draufsicht entsprechend Fig. 2;
- Fig. 5: einen Schnitt längs Linie 5-5 durch das erste Ausführungsbeispiel der erfindungsgemäßen Anhängekupplung in einer Freigabestellung;
- Fig. 6: einen Schnitt entsprechend Fig. 5 in einer Verkeilstellung;
- Fig. 7: einen vergrößerten Schnitt längs Linie 7-7 in Fig. 6;
- Fig. 8: einen Schnitt ähnlich Fig. 6 bei beginnender Betätigung einer Betätigungseinrichtung zum Erreichen der Freigabestellung;
- Fig. 9: einen Schnitt ähnlich Fig. 6 kurz vor einem Erreichen einer Verkeilstellung bei nicht betätigter Betätigungseinrichtung;
- Fig. 10: einen Schnitt ähnlich Fig. 5 bei nicht betätigter Betätigungseinrichtung, jedoch nicht in Arbeitsstellung stehendem Anhängeelement;
- Fig. 11: einen Längsschnitt durch ein zweites Ausführungsbeispiel einer erfindungsgemäßen Anhängekupplung in Fixierstellung und
- Fig. 12: einen Schnitt ähnlich Fig. 11 durch das zweite Ausführungsbeispiel in Freigabestellung.

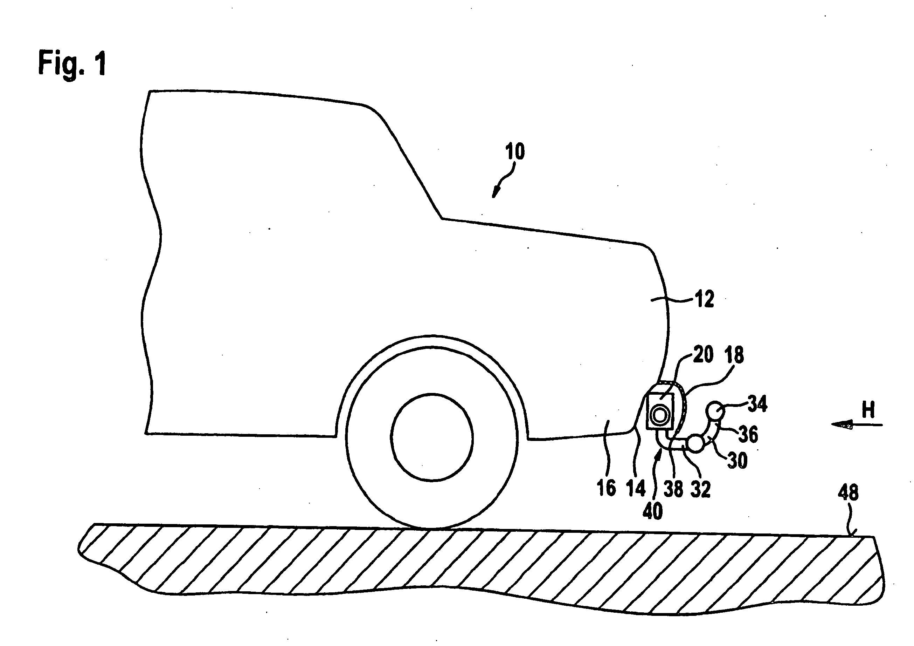

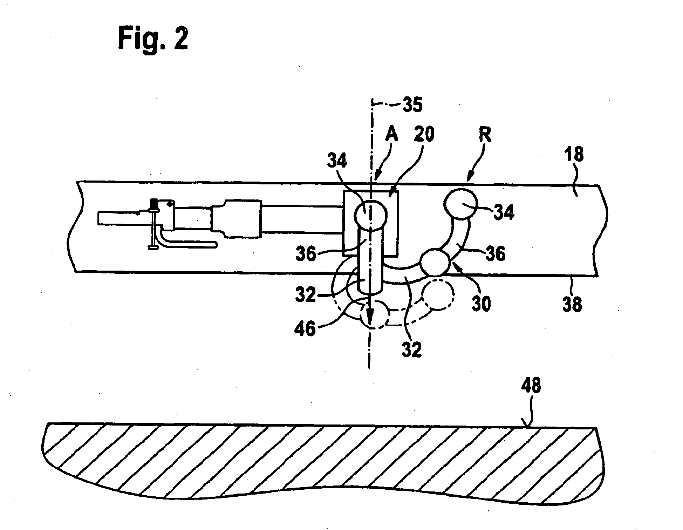

Ein erstes Ausführungsbeispiel einer erfindungsgemäßen Anhängekupplung ist, wie in Fig. 1 und 2 dargestellt, an einer Fahrzeugkarosserie 10 eines Personenkraftfahrzeugs in einem Heckbereich 12 angeordnet, wobei ein fahrzeugfestes Lagerelement 20 der erfindungsgemäßen Anhängekupplung zwischen einer Rückseite 14 eines unteren Heckbereichs 16 und einem Stoßfänger 18 montiert ist.

An dem Lagerelement 20 ist ein als Ganzes mit 30 bezeichnetes Anhängeelement vorgesehen, welches, wie in Fig. 1 und 2 dargestellt, von einer Arbeitsstellung A, in welcher sich das Anhängeelement 30 mit einem Kugelhals 32 und mit einer hinter dem Stoßfänger 18 liegenden Kupplungskugel 34 in einer Längsmittelebene 35 der Fahrzeugkarosserie 10 erstreckt, die an einem ersten Ende 36 des Kugelhalses 32 an diesen angeformt ist und in eine Ruhestellung R bringbar ist, in welcher sich der Kugelhals 32 zwischen der Rückseite 14 des unteren Heckbereichs 16 und dem Stoßfänger 18 erstreckt und im wesentlichen von dem Stoßfänger 18 überdeckt und somit sichtgeschützt im wesentlichen oberhalb einer Unterkante 38 des Stoßfängers 18 angeordnet ist.

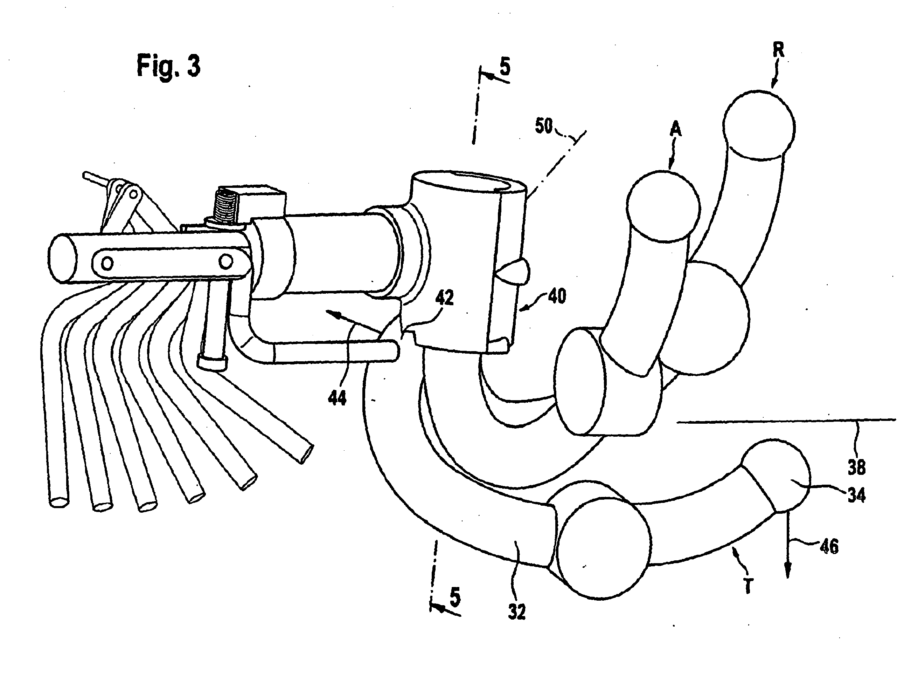

Um den Kugelhals 32 mit der Kupplungskugel 34 von der Arbeitsstellung A unter der Unterkante 38 des Stoßfängers 18 hindurch in die Ruhestellung R bewegen zu können, ist das Anhängeelement 30 mit einem als Ganzes mit 40 bezeichneten im Raum um drei senkrecht zueinander verlaufende Achsen, das heißt dreiachsig, schwenkbaren Gelenk an dem Lagerelement 20 gelagert, welches es erlaubt, zum erreichen einer Tauchstellung T den Kugelhals 32 mit seinem sich unmittelbar an das dreiachsige Gelenk 40 anschließenden zweiten Ende 42 soweit in einer von der Kupplungskugel 34 wegweisenden Richtung 44 zu verschwenken, daß sich die Kupplungskugel 34 in einer Richtung 46 zur Fahrbahn 48 hin absenken läßt, so daß sich die Kupplungskugel 34 in ihrer maximal abgesenkten Tauchstellung T um eine geeignet verlaufende Drehachse 50 in dem dreiachsig schwenkbaren Gelenk 40 drehen und somit unter der Unterkante 38 des Stoßfängers 18 hindurchbewegen läßt (Fig. 3).

Die Stellung der Kupplungskugel 34, in welcher diese den geringsten Abstand zur Fahrbahn 48 aufweist, und in welcher diese unter der Unterkante 38 des Stoßfängers 18 hindurchbewegbar ist, stellt daher die Tauchstellung T des Anhängeelements 30 und somit auch der Kupplungskugel 34 und des Kugelhalses 32 dar.

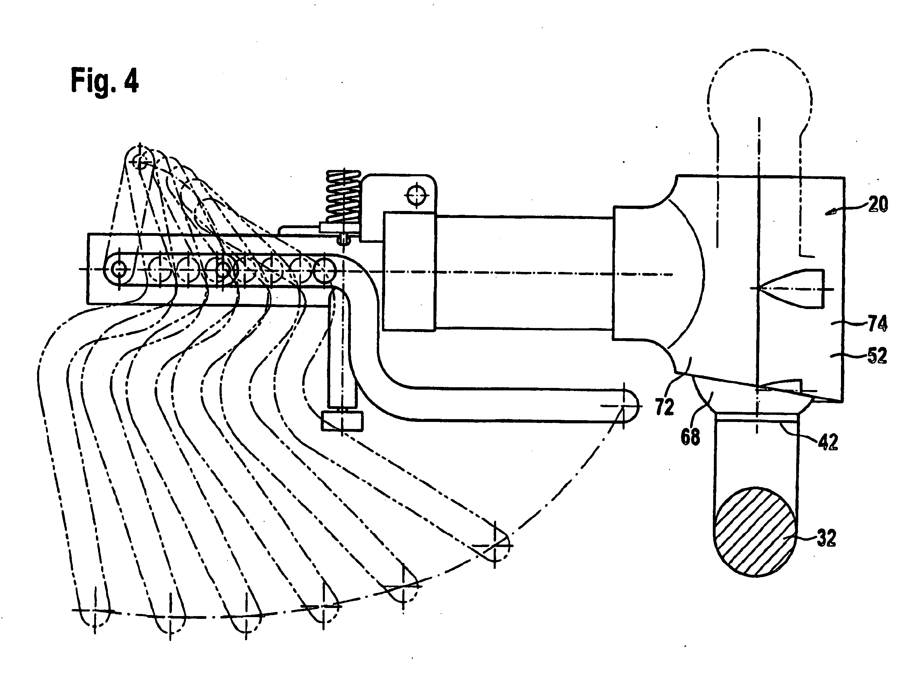

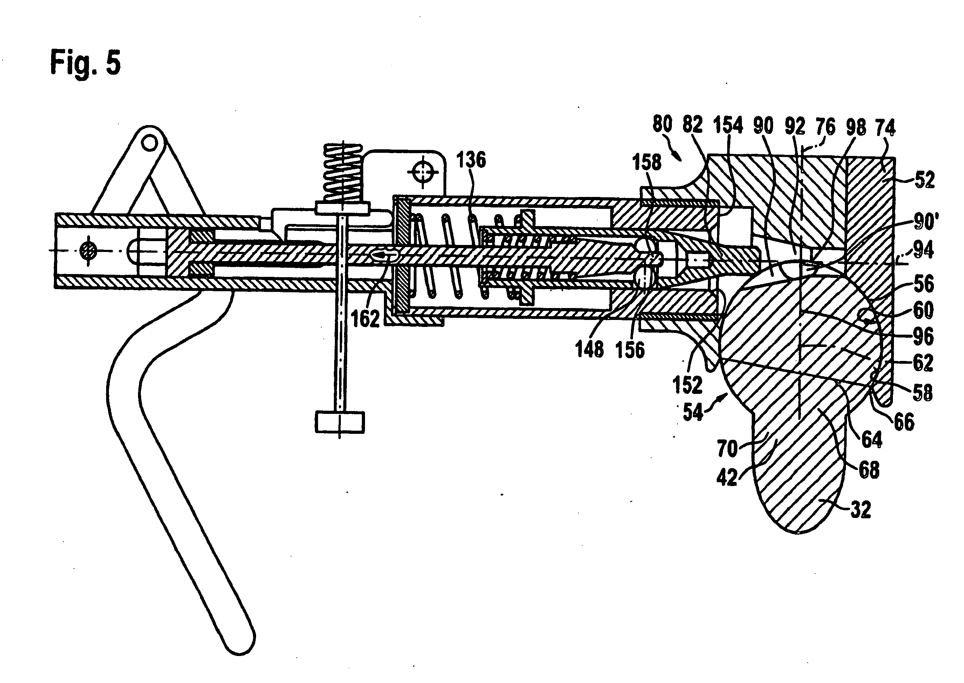

Wie in Fig. 4 und 5 dargestellt, ist das dreiachsig schwenkbare Gelenk 40 vorzugsweise gebildet durch ein Gelenkgehäuse 52, in welchem eine Gelenkkugel 54 angeordnet ist, die mit ihrer Kugelaußenfläche 56 in einer Kugelinnenfläche 58 einer vom Gelenkgehäuse 52 gebildeten Gelenkpfanne 60 um ihren Kugelmittelpunkt 62 allseits schwenkbar gelagert ist.

Die Gelenkpfanne 60 umgreift mit ihrer Kugelinnenfläche 58 die Kugelaußenfläche 56 im wesentlichen über mehr als eine Halbkugel und erstreckt sich mit der Kugelinnenfläche 58 vorzugsweise bis zu einem Rand 64 einer Öffnung 66 der Gelenkpfanne 60, über welchen die Gelenkkugel 54 noch mit einer weniger als einer Halbkugelfläche entsprechenden Kugelkappenfläche 68 übersteht, wobei in einem Teilbereich 70 der Kugelkappenfläche 68 das zweite Ende 42 des Kugelhalses 32 in die Gelenkkugel 54 übergeht.

Das die Gelenkpfanne 60 bildende Gelenkgehäuse 52 ist vorzugsweise zur leichteren Montage der Gelenkkugel 54 aus einem Gehäusekörper 72 und einem Gehäusekörperdeckel 74 zusammengesetzt, wobei der Gehäusekörperdeckel 74 einen derart großen Teilbereich der Kugelinnenfläche 58 bildet, daß die Gelenkkugel 54 in den vom Gehäusekörper 72 gebildeten Teilbereich der Kugelinnenfläche 58 einsetzbar ist.

Um beim Verschwenken des Anhängeelements 30 von der Arbeitsstellung in die Ruhestellung das zweite Ende 42 des Kugelhalses 32 weit genug in der Richtung 44 bewegen zu können, verläuft der Rand 64 der Öffnung 66 der Gelenkpfanne 60 nicht in einem rechten Winkel zu einer Vertikalen 76, sondern derart, daß der Rand 64 auf der der Tauchstellung T der Kupplungskugel 34 abgewandten Seite einen größeren Abstand zur Fahrbahnoberfläche 48 aufweist, als auf der der Tauchstellung T der Kupplungskugel 34 zugewandten Seite.

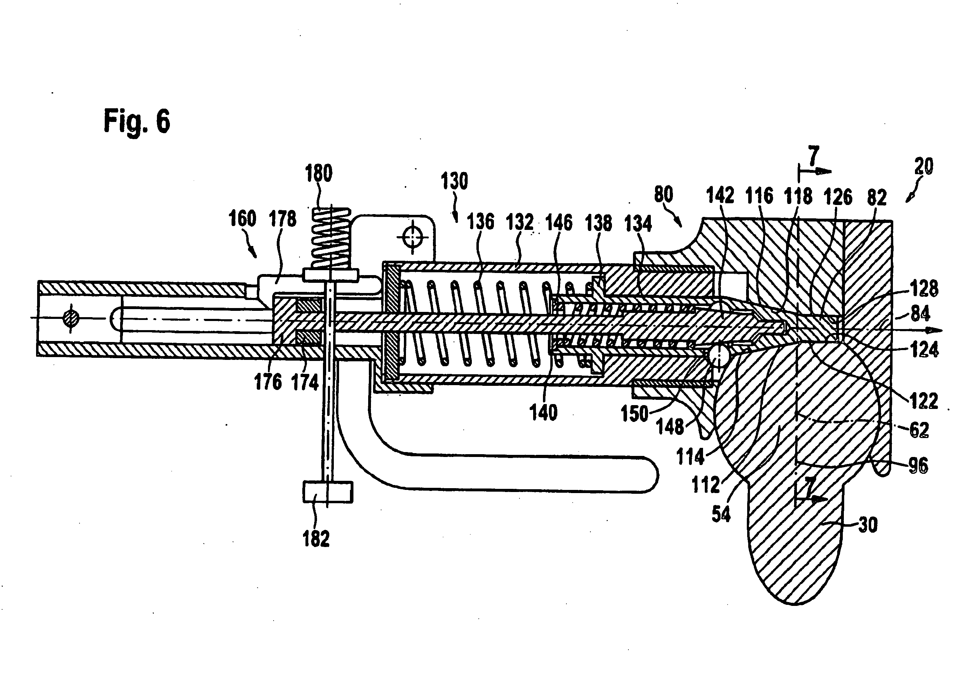

Zum Festlegen des Anhängeelements 30 relativ zum Lagerelement 20 ist eine in Fig. 5 und Fig. 6 als Ganzes mit 80 bezeichnete Fixiereinrichtung vorgesehen, welche ein Verkeilelement 82 aufweist, das von einer in Fig. 5 dargestellten Freigabestellung durch Bewegung in einer Einfahrrichtung 84 in eine in Fig. 6 dargestellte Verkeilstellung bewegbar ist.

In der in Fig. 5 dargestellten Freigabestellung liegt das Verkeilelement 82 außerhalb der Kugelinnenfläche 58 und behindert somit eine freie Verschwenkbarkeit der Gelenkkugel 54 um den Kugelmittelpunkt 62 nicht, so daß die Gelenkkugel 54 um den Kugelmittelpunkt allseitig verschwenkbar ist, wobei die Verschwenkbarkeit in einem Umfang solange möglich ist, bis das zweite Ende 42 des Kugelhalses 32 an dem Rand 64 der Öffnung 66 anstößt.

In der in Fig. 6 dargestellten Verkeilstellung bewirkt das Verkeilelement 82 ein Festlegen der Gelenkkugel 54 gegen jede Schwenkbewegung um den Kugelmittelpunkt 62, so daß insgesamt das Anhängeelement 30 relativ zum Lagerelement 20 starr und unbeweglich und vorzugsweise im übrigen noch spielfrei fixiert ist.

Hierzu sind, wie in Fig. 5, 6 und 7 dargestellt, in einem in der Gelenkpfanne 60 liegenden, vorzugsweise dem zweiten Ende 42 des Kugelhalses 32 gegenüberliegenden Bereich der Gelenkkugel 54 eine Ausnehmung 90 und dieser gegenüberliegend in der Gelenkpfanne 60 eine Ausnehmung 92 vorgesehen, welche sich in einer Tangentialrichtung 94 zur Kugelaußenfläche 56 sowohl durch die Gelenkpfanne 60 als auch die Gelenkkugel 54 hindurcherstrecken, wobei die Einfahrrichtung 84 des Verkeilelements 82 vorzugsweise mit einer Tangentialrichtung 94 in einem Berührungspunkt 98 der Kugelaußenfläche 56 zusammenfällt.

Somit bilden die Ausnehmungen 90 und 92 insgesamt eine Aufnahme für das Verkeilelement 82, welche sich in der Tangentialrichtung 94 beiderseits einer senkrecht zur Tangentialrichtung 94 und durch den Kugelmittelpunkt 62 verlaufenden Ebene 96 erstreckt, wobei auch das Verkeilelement 82 dann in der Aufnahme beiderseits der Ebene 96 verkeilend wirksam ist.

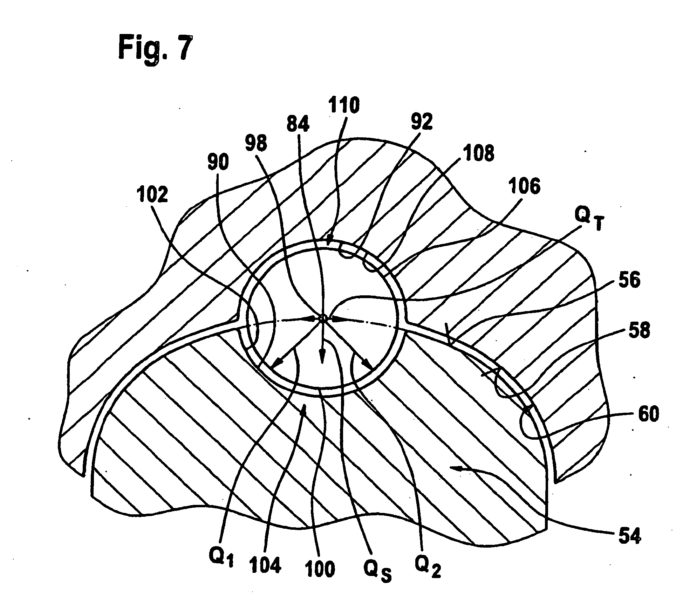

Wie in Fig. 7 dargestellt, ist das Verkeilelement 82 mit einem zur Einfahrrichtung 84 rotationssymmetrischen Querschnitt versehen und weist dadurch eine erste Verkeilflächenanordnung 100 mit halbkreisförmigem Querschnitt auf, welche der Ausnehmung 90 der Gelenkkugel 54 zugewandt ist und mit einer zweiten Verkeilflächenanordnung 102, ebenfalls ausgebildet mit halbkreisförmigem Querschnitt, der Ausnehmung 90 zusammenwirkt, wobei die Verkeilflächenanordnungen 100 und 102 einen ersten Keilflächensatz 104 bilden, welcher in mindestens zwei quer zur Einfahrrichtung 84 verlaufenden Querrichtungen Q₁ und Q₂, vorzugsweise in einer Vielzahl von in Richtung der Verkeilflächenanordnungen 100, 102 verlaufenden Querrichtungen Q wirksam ist, und somit sowohl in einer tangentialen Querrichtung Q_{T} wirksam ist als auch in einer senkrecht zur tangentialen Querrichtung Q_{T} verlaufenden und zum Kugelmittelpunkt 62 hinweisenden Querrichtung Q_{S}.

Ferner ist dadurch, daß sich das Verkeilelement 82 beiderseits der Ebene 96 erstreckt und auch der erste Keilflächensatz 104 beiderseits der Ebene 96 wirksam ist, auch eine Bewegung des Berührungspunkts 98 der Tangentialrichtung 94 mit der Kugelaußenfläche 56 in Richtung der Tangentialrichtung 94 verhindert, so daß der Berührungspunkt 98 sowohl in der Querrichtung Q_{T} als auch in der Tangentialrichtung 94 festgelegt ist und somit die Gelenkkugel 54 ihrerseits gegen jede Schwenkbewegung um den Kugelmittelpunkt 62 blockiert ist.

Darüber hinaus bewirkt die Wirkung des ersten Keilflächensatzes 104 in der Querrichtung Q_{S}, die zum Kugelmittelpunkt 62 hinweist, ein spielfreies Verkeilen der Gelenkkugel 54 in der Gelenkpfanne 60, vorzugsweise in einem sich an den Rand 64 anschließenden Bereich der Gelenkpfanne 60, so daß die Gelenkkugel 54 somit nicht nur unbeweglich in der Gelenkpfanne 60 fixiert ist, sondern auch gleichzeitig spielfrei in dieser verkeilt ist.

Um die durch den ersten Keilflächensatz 104 auf das Verkeilelement 82 wirkenden Kräfte unmittelbar aufzunehmen, weist das Verkeilelement 82 auf seiner der ersten Keilflächenanordnung 100 gegenüberliegenden Seite eine erste Keilflächenanordnung 106 auf, welche mit einer durch die Ausnehmung 92 gebildeten zweiten Keilflächenanordnung 108 wechselwirkt und insgesamt einen zweiten Keilflächensatz 110 bildet, welcher sich in der Tangentialrichtung 94 über die gleiche Länge erstreckt wie der erste Keilflächensatz 104.

Auch der zweite Keilflächensatz 110 ist in einer Vielzahl von quer zur Einfahrrichtung 84 und somit auch zur Tangentialrichtung 94 verlaufenden Querrichtungen Q, beispielsweise auch den Querrichtungen Q₁ und Q₂ wirksam und hat somit auch dieselbe Wirkung in Richtung Q_{T} und Q_{S}, so daß sämtliche vom ersten Keilflächensatz 104 auf das Verkeilelement 82 ausgeübten Kräfte vom zweiten Keilflächensatz unmittelbar auf die Gelenkpfanne 60 und somit auch das Gelenkgehäuse 52 übertragen werden.

Um eine Keilwirkung zu erreichen, verlaufen die Verkeilflächenanordnungen 100 und 102 sowie 106 und 108 zumindest bereichsweise konisch zur Einfahrrichtung 84, wobei vorzugsweise, wie in Fig. 5 und 6 dargestellt, im dargestellten Ausführungsbeispiel die in der Verkeilstellung des Verkeilelements 82 sich in Einfahrrichtung 84 bis zur Ebene 96 verlaufenden Teilbereiche 112 und 114 der Verkeilflächenanordnungen 100 und 102 des ersten Verkeilflächensatzes 104 sowie die Teilbereiche 116 und 118 der Verkeilflächenanordnungen 106 und 108 des zweiten Keilflächensatzes 110 mit zunehmender Erstreckung in der Einfahrrichtung 84 einen geringer werdenden Abstand von dieser aufweisen, während die Teilbereiche 122 und 124 der Verkeilflächenanordnungen 100 und 102 des ersten Verkeilflächensatzes 104 und die Teilbereiche 126 und 128 der Verkeilflächenanordnungen 106 und 108 des zweiten Keilflächensatzes 110 ungefähr zylindrisch zur Einfahrrichtung 84 verlaufen, um ein spielfreies Verkeilen der Gelenkkugel 54 gegenüber der Gelenkpfanne 60 zu erleichtern, da die Teilbereiche 112 und 114 sowie 116 und 118 zu einer geringfügigen Kippung der Gelenkkugel 54 dergestalt führen, daß auch die Teilbereiche 122 und 124 sowie 126 und 128 spielfrei aneinander anliegen und somit beiderseits der Ebene 96 die Gelenkkugel 54 spielfrei gegenüber der Gelenkpfanne 60 durch das Verkeilelement 82 abstützbar ist.

Zum Verschieben des Verkeilelements 82 in der Einfahrrichtung 84 ist eine als Ganzes mit 130 bezeichnete Antriebseinrichtung vorgesehen, welche ein Gehäuse 132 umfaßt, in welchem ein Antriebsstößel 134 in der Einfahrrichtung 84 und entgegengesetzt zu dieser bewegbar geführt ist.

Der Antriebsstößel 134 ist dabei an seinem vorderen Ende als das Verkeilelement 82 ausgebildet.

Der Antriebsstößel 134 ist ferner durch ein Federelement 136 in der Einfahrrichtung 84 beaufschlagt, wobei das Federelement 136 sich einerseits an dem Gehäuse 132 abstützt und andererseits auf einen Ringflansch 138 des Antriebsstößels 134 wirkt.

Das Federelement 136 verschiebt das Verkeilelement 82 nicht nur in Richtung der Verkeilstellung sondern wirkt auch noch in der Verkeilstellung mit einer Kraft auf dieses um somit sich später in der Verkeilstellung einstellendes Spiel durch eine Nachstellbewegung zu eliminieren und die Spielfreiheit langfristig aufrecht zu erhalten.

Im Innern des Antriebsstößels 134 ist eine sich in dessen Längsrichtung erstreckende Ausnehmung 140 vorgesehen, in welcher ein Sicherungsstößel 142 ebenfalls parallel zur Einfahrrichtung 84 oder entgegengesetzt zu dieser in einer Aktivierungsrichtung 141 relativ zum Antriebsstößel 134 zwischen einer inaktiven Stellung und einer sicherungsaktiven Stellung verschieblich gelagert ist, wobei der Sicherungsstößel 142 durch eine in der Ausnehmung 140 angeordnete Feder 144 in Richtung seiner aktiven Stellung beaufschlagt ist, welche sich an einer die Ausnehmung 140 abschließenden Stützscheibe 146 abstützt.

Durch den Sicherungsstößel 142 sind Sicherungskörper 148 beaufschlagbar, welche in Ausnehmungen 150 des Antriebsstößels 134 angeordnet sind und in einer Bewegungsrichtung 151 quer zur Einfahrrichtung 84 in eine in Fig. 6 dargestellte Sicherungsstellung bewegbar sind, in welcher die Sicherungskörper 148 radial über den Antriebsstößel 134 überstehen und eine beispielsweise in Fig. 6 dargestellte Sicherungsfläche 152 hintergreifen und dadurch den Antriebsstößel 134 gegen eine Bewegung entgegengesetzt zur Einfahrrichtung 84 sichern.

Vorzugsweise ist dabei die Sicherungsfläche 152 an einem dem Gelenkgehäuse 52 zugewandten Endbereich 154 des Gehäuses 132 angeordnet.

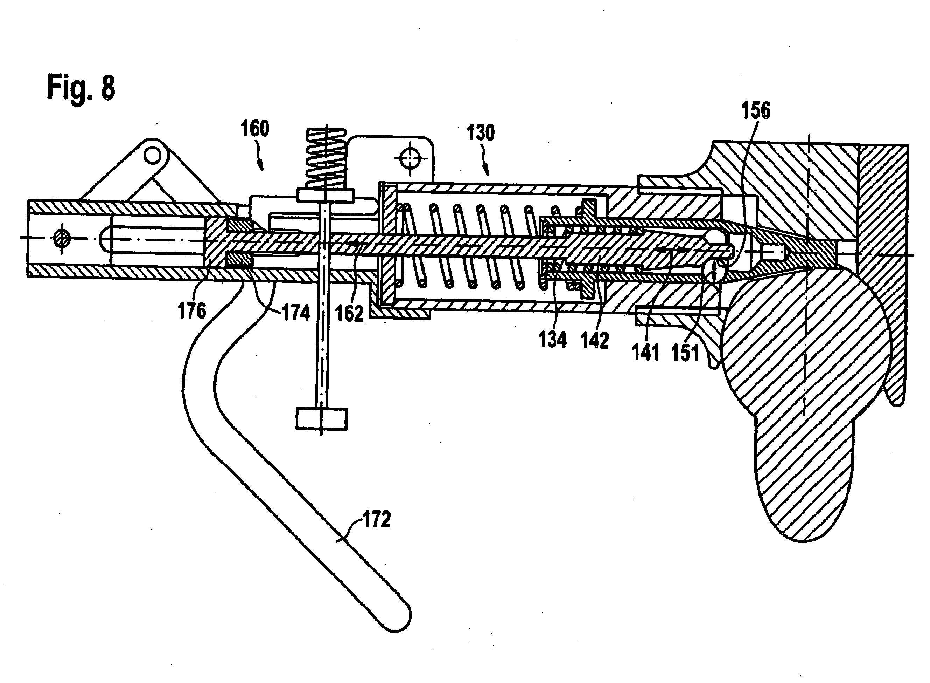

Um dem Sicherungskörper 148 die Möglichkeit zu geben, in eine Entsicherungsstellung überzugehen, ist der Sicherungsstößel 142 mit einer Ausnehmung 156 versehen, welche an einem vorderen, dem Verkeilelement 82 zugewandten Ende 158 des Sicherungsstößels 142 angeordnet ist und dann, wenn diese Ausnehmung 156 in Höhe der Sicherungskörper 148 steht diesen die Möglichkeit gibt, in die Ausnehmung 156 einzutreten und somit von ihrer Sicherungsstellung in eine Entsicherungsstellung überzugehen. In dieser Entsicherungsstellung ist der Antriebsstößel 134 von der in Fig. 6 dargestellten Verkeilstellung in Richtung seiner in Fig. 5 dargestellten Freigabestellung bewegbar, wie sich aus Fig. 8 ergibt.

Um die Ausnehmung 156 allerdings in Höhe der Sicherungskörper 148 zu positionieren, ist der Sicherungsstößel 142 durch eine Betätigungseinrichtung 160 zu betätigen und von seiner durch die Feder 144 maximal in den Antriebsstößel 134 eingeschobenen Position unter Kompression der Feder 144 in eine, in Fig. 8 dargestellte zurückgezogene inaktiven Stellung zu bewegen, in welcher dann die Sicherungskörper 148 die Möglichkeit haben, in die Ausnehmung 156 einzutreten und aus ihrer Sicherungsstellung in die Entsicherungsstellung überzugehen.

Erfolgt weiterhin eine Zugwirkung auf den Sicherungskörper 148 in einer Betätigungsrichtung 162, welche entgegengesetzt zur Einfahrrichtung 84 gerichtet ist, so besteht bei in der zurückgezogenen inaktiven Stellung stehendem Sicherungsstößel 142 die Möglichkeit, den gesamten Antriebsstößel 134 gegen die Wirkung des Federelements 136 weiter in der Betätigungsrichtung 162 zu bewegen und somit von der Verkeilstellung, dargestellt in Fig. 6, in die Freigabestellung, dargestellt in Fig. 5, zu überführen.

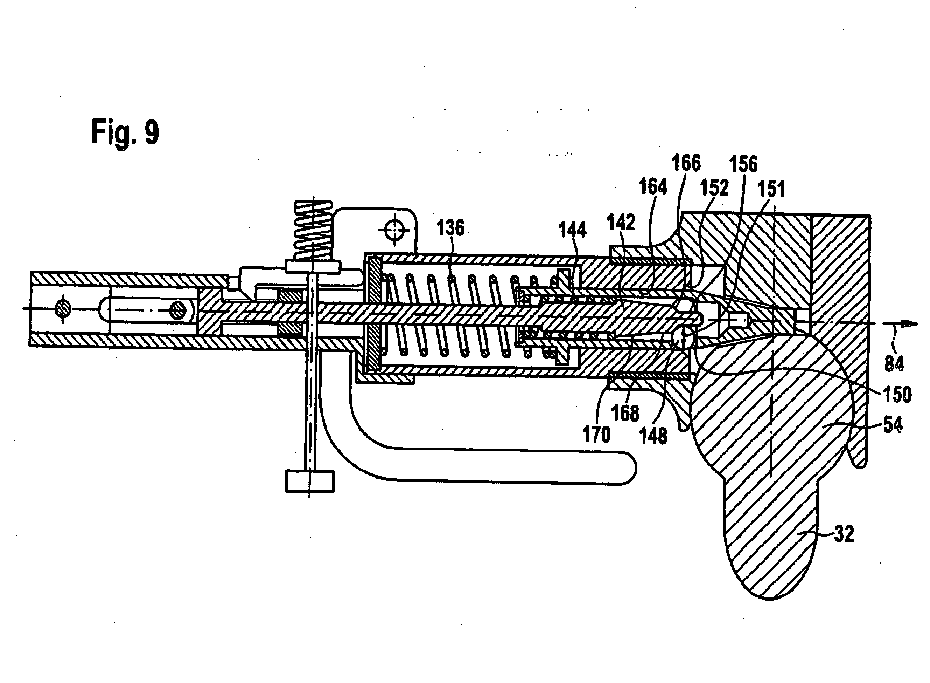

Entfällt die von der Betätigungseinrichtung 160 in Betätigungsrichtung 162 wirkende Kraft, so schiebt zunächst das Federelement 136 den Antriebsstößel bei in Arbeitsstellung stehender Gelenkkugel 54 von der in Fig. 5 dargestellten Freigabestellung in die durch die Ausnehmungen 90 und 92 gebildete Aufnahme hinein, wie in Fig. 9 dargestellt, wobei zunächst nur das Federelement 136 zur Wirkung kommt.

Die Feder 144 wirkt dabei ebenfalls noch auf die Sicherungskörper 148, diese haben jedoch noch nicht die Möglichkeit, aus den Ausnehmungen 150 auszutreten, da sie noch in einem Führungskanal 164, welcher den Antriebsstößel 134 bis zu den Sicherungsflächen 152 umgibt, geführt sind.

Erst bei Erreichen der Sicherungsflächen 152 können die Sicherungskörper 148 aus den Ausnehmungen 150 radial zum Antriebsstößel 134 in ihrer Bewegungsrichtung 151 austreten und die Sicherungsflächen 152 hintergreifen.

Die Sicherungsflächen 152 erstrecken sich nicht senkrecht zur Einfahrrichtung 84, sondern schräg zu dieser und schräg zur Bewegungsrichtung 151, so daß in diesem Fall die durch die Feder 144 beaufschlagten Sicherungskörper 148 eine Kraftkomponente in der Einfahrrichtung 84 erfahren, die sich über die Ausnehmungen 150 auf den Antriebsstößel 134 zusätzlich auswirkt.

Darüber hinaus schließt sich an die Ausnehmung 156 zur Aufnahme der Sicherungskörper 148 eine Ausfahrschräge 166 an, welche die Sicherungskörper 148 bereits aufgrund einer kurzen Vorschubstrecke des Sicherungsstößels 142 vollständig aus den Ausnehmungen 150 austreten und sich auf der Sicherungsfläche 152 abstützen läßt.

Im Anschluß an die Ausfahrschräge 166 folgt ein zylindrischer Bereich 168 des Sicherungsstößels 142 und auf diesen ein konischer Bereich 170 mit geringem Konuswinkel.

In der Sicherungsstellung beaufschlagt der konische Bereich 170 die Sicherungskörper 148, so daß diese durch den Sicherungsstößel 142 aufgrund des konischen Bereichs 170 ständig mit einer in Richtung der Sicherungsfläche 152 wirkenden Kraft beaufschlagt sind und jedes sukzessive weitere Vorrücken des Antriebsstößels 134 zu einem weiteren Vorschieben des Sicherungsstößels 142 mit dem konischen Bereich 170 führt, so daß folglich die Sicherungskörper 148 ständig eine Kraftwirkung auf den Antriebsstößel 134 in Richtung der Verkeilstellung entfalten und damit auch dazu beitragen, bei sich in der Verkeilstellung ausbildendem Spiel, dieses durch eine weitere Bewegung des Verkeilelements 82 in der Einfahrrichtung 84 zu beseitigen, wobei die durch das Federelement 136 auf das Verkeilelement 82 direkt wirkende Kraft vorzugsweise noch verstärkt wird.

Der zwischen der Ausfahrschräge 166 und dem konischen Bereich 170 angeordnete zylindrische Bereich dient dazu, zu verhindern, daß die Sicherungskörper 148 von ihrer Sicherungsstellung ausgehend bei Kraftbeaufschlagung des Verkeilelements 82 entgegengesetzt zur Einfahrrichtung 84 den Sicherungsstößel 142 von der vorgeschobenen aktiven in die zurückgezogene inaktive Stellung bewegen können.

Selbst wenn die entgegengesetzt zur Einfahrrichtung 84 auf das Verkeilelement 82 wirkende Kraft die Sicherungskörper 148 von ihrer Sicherungsstellung in Richtung des konischen Bereichs 170 beaufschlagen und zu einer geringfügigen Verschiebung des Sicherungsstößels 142 führen würden, so ist diese spätestens dann beendet, wenn die Sicherungskörper 148 den zylindrischen Bereich 168 beaufschlagen, da in diesem Fall keine resultierende Kraft mehr erzeugt werden kann, die den Sicherungsstößel 142 in Richtung seiner zurückgezogenen inaktiven Stellung beaufschlagen kann.

Die Betätigungseinrichtung 160 kann in unterschiedlichster Art und Weise ausgebildet sein.

Wie in Fig. 6 bis 8 dargestellt, umfaßt die Betätigungseinrichtung 160 beispielsweise einen Betätigungshebel 172, welcher, wie in Fig. 4, 5 und 8 erkennbar als Knickhebel ausgebildet ist und in der Lage ist, eine Schiebehülse 174 in Richtung von der Antriebseinrichtung 130 weg zu verschieben, wobei die Verschiebehülse 174 auf ein an den Sicherungsstößel 142 angeformtes und aus der Antriebseinrichtung 130 auf einer dem Verkeilelement 82 gegenüberliegenden Seite herausgeführtes Betätigungselement 176 wirkt, um dieses in der Betätigungsrichtung 162 zu verschieben, wenn der Betätigungshebel 172 in Richtung der Fahrbahn 48 gedrückt wird.

Durch den Knickhebel 172 besteht die Möglichkeit, ein variierendes Übersetzungsverhältnis zu erhalten, das mit zunehmender Verschiebung der Schiebehülse 174 von der Antriebseinrichtung 130 weg günstiger wird und somit insbesondere die zunehmende Gegenkraft des Federelements 136 zumindest zum Teil kompensiert oder noch besser kompensiert.

Ferner ist zusätzlich noch, wie in Fig. 6 dargestellt, eine Sicherungsraste 178 vorgesehen, welche von einer Feder 180 beaufschlagbar ist und ein Verschieben des Betätigungselements 176 in der Betätigungsrichtung 162 blockiert. Erst nach Lösen der Sicherungsraste 178 durch Betätigen eines Druckelements 182 läßt sich mit dem Betätigungshebel 172 das Betätigungselement 176 in der Betätigungsrichtung 162 verschieben.

Ferner ist zwischen dem Betätigungselement 176 und der Schiebehülse 174 noch ein Freilauf möglich, so daß bei Loslassen des Betätigungshebels 172 in einer Freigabestellung des Verkeilelements 82 die Schiebehülse 174 in ihre Ausgangsposition zurückkehren kann, während das Betätigungselement 176 in seiner zurückgezogenen Stellung entsprechend der Position des Sicherungsstößels 142 solange verbleibt, bis das Verkeilelement 82 in die durch die Ausnehmungen 90 und 92 gebildete Aufnahme eintreten kann.

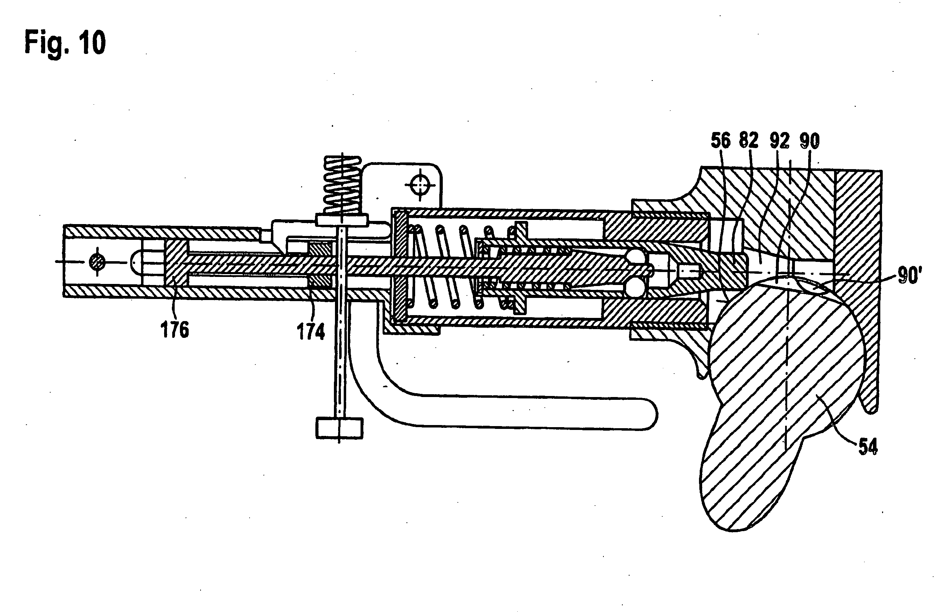

Steht beispielsweise die Gelenkkugel 54 nicht in der Arbeitsstellung A, so bleibt diese Stellung, wie in Fig. 10 dargestellt, durch das an die Kugelaußenfläche 56 anstoßende Verkeilelement 82 so lange erhalten, bis die Gelenkkugel 54 in der Arbeitsstellung A steht.

Die Fixierung der Gelenkkugel 54 in der Ruhestellung R kann in gleicher Weise wie in der Arbeitsstellung A erfolgen, wenn die Gelenkkugel 54 nicht nur mit der Ausnehmung 90 versehen ist, sondern noch zusätzlich mit einer der Ruhestellung R zugeordneten Ausnehmung 90' erkennbar in Fig. 5 und 10, mit welcher das Verkeilelement 82 in der Ruhestellung R - anstelle der Ausnehmung 90 - in Eingriff bringbar ist.

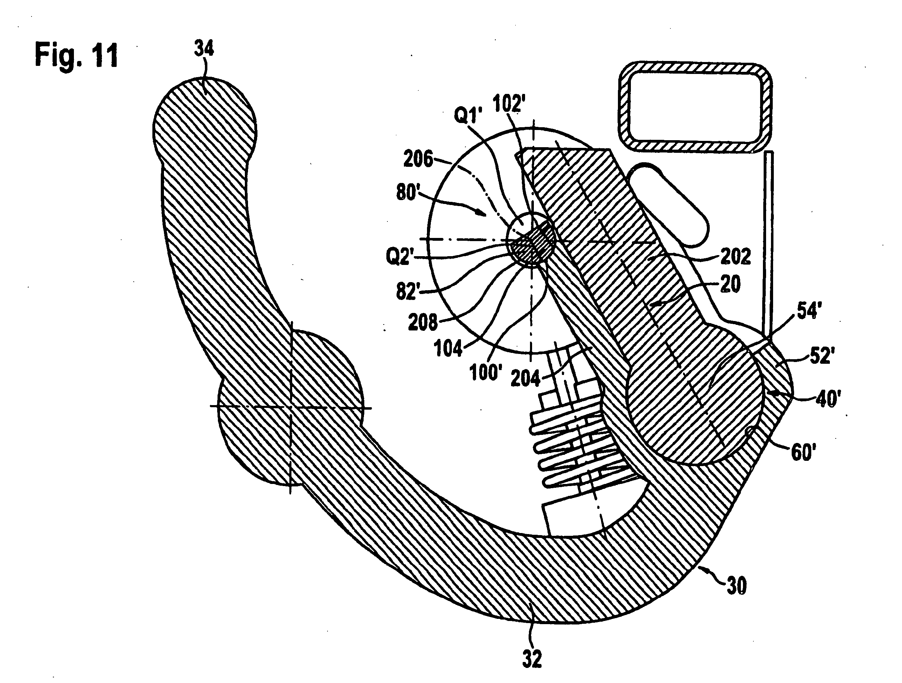

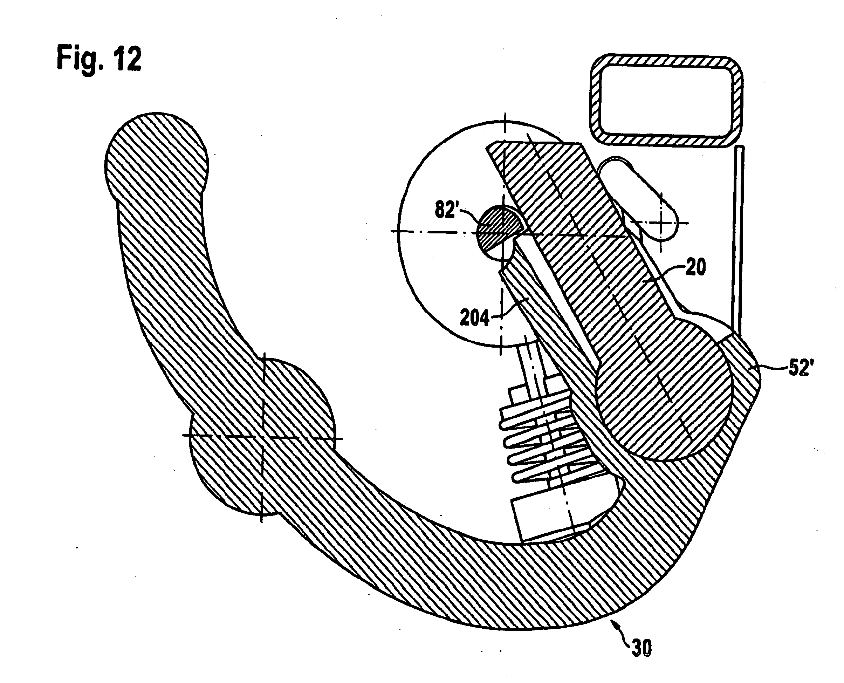

Bei einem zweiten Ausführungsbeispiel einer erfindungsgemäßen Lösung, dargestellt in Fig. 11 und 12, ist das dreiachsig schwenkbare Gelenk 40' insoweit anders ausgebildet als die Gelenkkugel 54' Teil des Lagerelements 20 ist und an einem Fortsatz 202 des Lagerelements 20 einstückig angeformt ist.

Ferner umfaßt das Anhängeelement 30 das Gelenkgehäuse 52' mit der Gelenkpfanne 60', die relativ zur Gelenkkugel 54' mitsamt dem Anhängeelement 30 verschwenkbar ist.

Die gesamte Bewegbarkeit des Gelenkgehäuses 52' relativ zur fahrzeugfest angeordneten Gelenkkugel 54' ergibt sich in vergleichbarer Weise aus dem ersten Ausführungsbeispiel.

Im Gegensatz zum ersten Ausführungsbeispiel ist das Gelenkgehäuse 52' noch mit einem Gehäuseansatz 204 versehen, welcher sich in der Arbeitsstellung A und der Fixierstellung längs des Fortsatzes 202 erstreckt und an diesem in Fortsetzung des Gelenkgehäuses 52 anliegt.

Zum Anlegen des Gehäuseansatzes 204 ist ein Verkeilelement 82' vorgesehen, welches in diesem Fall als Exzenter ausgebildet ist und eine gegenüber einer Drehachse 206 exzentrisch verlaufende Exzenterfläche 208 aufweist, welche die erste Verkeilflächenanordnung 100' bildet, die ihrerseits auf eine Verkeilflächenanordnung 102' am Gehäuseansatz 204 einwirkt, um den Gehäuseansatz 204 an dem Fortsatz 202 anzulegen.

Darüber hinaus wirkt dieser erste Verkeilflächensatz 104' nicht nur in einer Querrichtung Q₁' zur Drehachse 206 und somit in Richtung eines Anlegens des Gehäuseansatzes 204 am Fortsatz 202, sondern gleichzeitig in einer Richtung Q₂' quer zur Drehachse 206, das heißt in Richtung der Gelenkpfanne 60', so daß dadurch auch die Gelenkpfanne 60' spielfrei zur Gelenkkugel 54' verspannbar ist.

Somit ist in der Fixierstellung mittels des Verkeilelements 82' dieses in eine Verkeilstellung bringbar, in welcher das Anhängeelement 30 fest gegenüber dem Lagerelement 20 positioniert und im übrigen auch noch spielfrei an diesem gehalten ist.

Durch Verdrehen des Verkeilelements 82' kann der Gehäuseansatz 204 des Gelenkgehäuses 52' freigegeben werden und somit kann das gesamte Gelenkgehäuse 52' und somit auch das Anhängeelement 30 relativ zum Lagerelement 20 von der Arbeitsstellung A über die Tauchstellung T in die Ruhestellung R und umgekehrt bewegt werden.

Eine Fixierung in der Ruhestellung R kann bei diesem Ausführungsbeispiel mit vereinfachten Rastmitteln, beispielsweise einer Federklammer, erfolgen, mit welchen das Anhängeelement 30 in der Ruhestellung R verrastbar ist.

## Patentansprüche

1. Anhängekupplung für Kraftfahrzeuge umfassend
ein fahrzeugfestes Lagerelement (20), ein gegenüber dem fahrzeugfesten Lagerelement (20) von einer Arbeitsstellung (A) in eine Ruhestellung (R) und umgekehrt bewegbares Anhängeelement (30), welches eine Kupplungskugel (34) und einen die Kupplungskugel (34) an einem ersten Ende (36) tragenden Kugelhals (32) umfasst, und eine eine Fixierstellung und eine Freigabestellung aufweisende Fixiereinrichtung (80), mit welcher das bewegbare Anhängeelement (30) mindestens in der Arbeitsstellung (A) durch die Fixierstellung an dem Lagerelement (20) fixierbar ist,
**dadurch gekennzeichnet, dass** das Anhängeelement (30) in der Freigabestellung mittels eines dreiachsig schwenkbaren Gelenks (40) gelenkig mit dem Lagerelement (20) verbunden ist, dass das dreiachsig schwenkbare Gelenk ein Kugelgelenk (40) ist, dass das Kugelgelenk (40) eine von einem der Elemente (30, 20) umfasste Gelenkkugel (54) und eine vom anderen der Elemente (20, 30) umfasste, die Gelenkkugel (54) aufnehmende Gelenkpfanne (60) aufweist und dass das Kugelgelenk (40) in der Fixierstellung durch Anhängelasten bedingte Kräfte aufnimmt und diese auf das Lagerelement (20) überträgt.

2. Anhängekupplung nach Anspruch 1, **dadurch gekennzeichnet, dass** die Gelenkpfanne (60) die Gelenkkugel (54) über einen mehr als einer Halbkugel entsprechenden Oberflächenbereich übergreift.

3. Anhängekupplung nach Anspruch 2, **dadurch gekennzeichnet, dass** die Gelenkpfanne (60) eine Öffnung (66) aufweist, aus welcher die Gelenkkugel (54) mit einer Kugelkappenfläche (68) frei übersteht.

4. Anhängekupplung nach einem der voranstehenden Ansprüche, **dadurch gekennzeichnet, dass** die Gelenkpfanne (60) aus mindestens zwei Teilkörpern (72, 74) zusammengesetzt ist.

5. Anhängekupplung nach einem der voranstehenden Ansprüche, **dadurch gekennzeichnet, dass** die Gelenkpfanne (60) von dem Lagerelement (20) umfasst ist und dass die Gelenkkugel (54) von dem Anhängeelement (30) umfasst ist.

6. Anhängekupplung nach Anspruch 5, **dadurch gekennzeichnet, dass** die Gelenkkugel (54) an einem zweiten Ende (42) des Kugelhalses (32) angeordnet ist.

7. Anhängekupplung nach Anspruch 6, **dadurch gekennzeichnet, dass** die Gelenkkugel (54) einstückig an den Kugelhals (32) angeformt ist.

8. Anhängekupplung nach einem der Ansprüche 1 bis 4, **dadurch gekennzeichnet, dass** die Gelenkpfanne (60') von dem Anhängeelement (30) umfasst ist und dass die Gelenkkugel (54') von dem Lagerelement (20) umfasst ist.

9. Anhängekupplung nach Anspruch 8, **dadurch gekennzeichnet, dass** ein Teil der Gelenkpfanne (60') einstückig an den Kugelhals (32) angeformt ist.

10. Anhängekupplung nach Anspruch 8 oder 9, **dadurch gekennzeichnet, dass** das Lagerelement (20) einen Fortsatz (202) aufweist, an welchem die Gelenkkugel (54') angeordnet ist.

11. Anhängekupplung nach Anspruch 10, **dadurch gekennzeichnet, dass** die Gelenkkugel (54') einstückig an dem Fortsatz (202) angeordnet ist.

12. Anhängekupplung nach einem der voranstehenden Ansprüche, **dadurch gekennzeichnet, dass** mit der Fixiereinrichtung (80) in der Fixierstellung das dreiachsige Gelenk (40) gegen eine Schwenkbewegung in allen Achsrichtungen fixierbar ist.

13. Anhängekupplung nach Anspruch 12, **dadurch gekennzeichnet, dass** die Fixiereinrichtung (80) ein blockierend wirkendes Verkeilelement (82) aufweist.

14. Anhängekupplung nach einem der voranstehenden Ansprüche, **dadurch gekennzeichnet, dass** ein Verkeilelement (82) eine erste Verkeilflächenanordnung (100) eines ersten Verkeilflächensatzes (104) aufweist und an einem der Elemente (20) gelagert ist und dass das andere der Elemente (30) eine zweite Verkeilflächenanordnung (102) des ersten Verkeilflächensatzes (104) trägt.

15. Anhängekupplung nach Anspruch 14, **dadurch gekennzeichnet, dass** das Verkeilelement (82) mit mindestens einer ersten Verkeilflächenanordnung (106) eines zweiten Verkeilflächensatzes (110) versehen ist und dass das eine der Elemente (20) mindestens eine zweite Verkeilflächenanordnung (108) des zweiten Verkeilflächensatzes (110) trägt.

16. Anhängekupplung nach Anspruch 14 oder 15, **dadurch gekennzeichnet, dass** jeder Verkeilflächensatz (104, 110) in mindestens einer quer zu einer Einfahrrichtung (84) des Keilelements (82) verlaufenden Querrichtung (Q) verkeilend zur Wirkung bringbar ist.

17. Anhängekupplung nach Anspruch 16, **dadurch gekennzeichnet, dass** jeder Verkeilflächensatz (104, 110) mindestens eine mit zunehmender Erstreckung in Einfahrrichtung (84) in der Querrichtung (Q) einen zunehmend geringer werdenden Abstand von der Einfahrrichtung (84) aufweisende Keilfläche aufweist.

18. Anhängekupplung nach Anspruch 17, **dadurch gekennzeichnet, dass** jeder Verkeilflächensatz (104, 110) zwei aneinander flächig zur Anlage bringbare Keilflächen umfasst.

19. Anhängekupplung nach einem der Ansprüche 12 bis 18, **dadurch gekennzeichnet, dass** durch das Verkeilelement (82) das dreiachsig schwenkbare Gelenk (40) spielfrei verkeilbar ist.

20. Anhängekupplung nach Anspruch 19, **dadurch gekennzeichnet, dass** jeder Verkeilflächensatz (104, 110) in mindestens zwei quer zur Einfahrrichtung (84) des Verkeilelements (82) und quer zueinander verlaufenden Querrichtungen (Q) verkeilend wirksam ist.

21. Anhängekupplung nach Anspruch 20, **dadurch gekennzeichnet, dass** eine der beiden Querrichtungen (Q_{T}) eine Komponente in Richtung einer Relativbewegungsrichtung der Elemente (20, 30) im Bereich der Keilflächenanordnungen (100, 102, 106, 108) aufweisen.

22. Anhängekupplung nach Anspruch 20 oder 21, **dadurch gekennzeichnet, dass** eine der beiden Querrichtungen eine Komponente (Qₛ) in Richtung senkrecht zu einer Relativbewegungsrichtung (Q_{T}) der Elemente (20, 30) im Bereich der Keilflächenanordnungen (100, 102, 106, 108) aufweist.

23. Anhängekupplung nach einem der Ansprüche 20 bis 22, **dadurch gekennzeichnet, dass** jeder Keilflächensatz (104, 110) mindestens zwei in den unterschiedlichen Querrichtungen (Q_{T}, Q_{S}) einen mit zunehmender Erstreckung in Einfahrrichtung zunehmend geringer werdenden Abstand von der Einfahrrichtung aufweisende Keilflächen (100, 102, 106, 108) umfasst.

24. Anhängekupplung nach einem der Ansprüche 12 bis 23, **dadurch gekennzeichnet, dass** das Verkeilelement (82) auf einen in der Gelenkpfanne (60) liegenden Bereich der Gelenkkugel (54) wirkt.

25. Anhängekupplung nach Anspruch 24, **dadurch gekennzeichnet, dass** das Verkeilelement (82) zwischen der Gelenkkugel (54) und der Gelenkpfanne (60) zur Wirkung bringbar ist.

26. Anhängekupplung nach Anspruch 24 oder 25, **dadurch gekennzeichnet, dass** das Verkeilelement (82) eine Bewegung einer Kugelaußenfläche (56) der Gelenkkugel (54) relativ zu einer Kugelinnenfläche (58) der Gelenkpfanne (60) in allen Flächenrichtungen blockiert.

27. Anhängekupplung nach einem der Ansprüche 24 bis 26, **dadurch gekennzeichnet, dass** das Verkeilelement (82) mit seiner Einfahrrichtung (84), welche ungefähr parallel zu einer Tangentialrichtung (94) in einem Berührungspunkt (98) der Kugelaußenfläche der Gelenkkugel (54) verläuft, in die Verkeilstellung einfahrbar ist.

28. Anhängekupplung nach einem der Ansprüche 24 bis 27, **dadurch gekennzeichnet, dass** das Verkeilelement (82) in eine die Gelenkkugel (54) ungefähr parallel zu einer Tangentialrichtung (94) schneidende Ausnehmung (90) eingreift.

29. Anhängekupplung nach Anspruch 28, **dadurch gekennzeichnet, dass** die Ausnehmung (90) Wandflächen aufweist, welche die zweite Verkeilflächenanordnung (102) des ersten Verkeilflächensatzes (104) bilden.

30. Anhängekupplung nach einem der Ansprüche 24 bis 29, **dadurch gekennzeichnet, dass** die Gelenkpfanne (60) eine Ausnehmung (92) aufweist, welche die Kugelinnenfläche (58) auf gegenüberliegenden Seiten durchstößt.

31. Anhängekupplung nach Anspruch 30, **dadurch gekennzeichnet, dass** die Ausnehmung (92) zwischen den Durchstoßstellen gegenüber der Kugelinnenfläche (58) vertieft verläuft.

32. Anhängekupplung nach einem der Ansprüche 29 bis 31, **dadurch gekennzeichnet, dass** die Ausnehmung (92) die zweite Verkeilflächenanordnung (108) des zweiten Verkeilflächensatzes (110) bildet.

33. Anhängekupplung nach einem der Ansprüche 12 bis 23, **dadurch gekennzeichnet, dass** das die Gelenkpfanne (60) bildende Gehäuse (52) einen Gehäuseansatz (204) aufweist, welcher mit dem die Gelenkkugel (54) tragenden Element (20) bei wirksamer Fixiereinrichtung in Anlage bringbar ist.

34. Anhängekupplung nach Anspruch 33, **dadurch gekennzeichnet, dass** das Verkeilelement (82) derart wirkt, dass das Verkeilelement (82) den Gehäuseansatz (204) und das andere Element (20) gegeneinander beaufschlagt.

35. Anhängekupplung nach Anspruch 34, **dadurch gekennzeichnet, dass** das Verkeilelement (82) auf den Gehäuseansatz (204) wirkt und an dem anderen Element (20) gelagert ist.

36. Anhängekupplung nach einem der voranstehenden Ansprüche, **dadurch gekennzeichnet, dass** das Verkeilelement (82) an dem Lagerelement (20) gelagert ist und gegenüber diesem zwischen einer Verkeilstellung und einer Freigabestellung bewegbar ist.

37. Anhängekupplung nach einem der voranstehenden Ansprüche, **dadurch gekennzeichnet, dass** das Verkeilelement (82) durch eine lineare Verschiebebewegung zwischen der Verkeilstellung und der Freigabestellung bewegbar ist.

38. Anhängekupplung nach einem der Ansprüche 1 bis 36, **dadurch gekennzeichnet, dass** das Verkeilelement (82') durch eine Drehbewegung zwischen der Verkeilstellung und der Freigabestellung bewegbar ist.

39. Anhängekupplung nach einem der voranstehenden Ansprüche, **dadurch gekennzeichnet, dass** das Verkeilelement (82) durch eine Antriebseinrichtung (130) in der Einfahrrichtung (84) in die Verkeilstellung bewegbar ist.

40. Anhängekupplung nach Anspruch 39, **dadurch gekennzeichnet, dass** die Antriebseinrichtung (130) einen elastischen Kraftspeicher (136) aufweist, welcher das Verkeilelement (82) in der Einfahrrichtung (84) beaufschlagt.

41. Anhängekupplung nach Anspruch 40, **dadurch gekennzeichnet, dass** die Antriebseinrichtung (130) einen durch den federelastischen Kraftspeicher (136) beaufschlagten und auf das Verkeilelement (82) wirkenden Antriebsstößel (134) aufweist, welcher in einem Gehäuse (132) geführt ist.

42. Anhängekupplung nach Anspruch 41, **dadurch gekennzeichnet, dass** in dem Antriebsstößel (134) ein gegenüber diesem federbeaufschlagt angeordneter Sicherungsstößel (142) vorgesehen ist.

43. Anhängekupplung nach Anspruch 42, **dadurch gekennzeichnet, dass** mit dem Sicherungsstößel (142) die Position von mindestens einem in einer Aufnahme (150) im Antriebsstößel (134) angeordneten Sicherungskörper (148) festlegbar ist.

44. Anhängekupplung nach Anspruch 42 oder 43, **dadurch gekennzeichnet, dass** in einer Sicherungsstellung des Sicherungsstößels (142) der mindestens eine Sicherungskörper (148) radial über den Antriebsstößel (134) übersteht und eine an dem Gehäuse (132) vorgesehene Sicherungsfläche (152) hintergreift.

45. Anhängekupplung nach Anspruch 44, **dadurch gekennzeichnet, dass** in einer Entsicherungsstellung des Sicherungsstößels (142) der mindestens eine Sicherungskörper (148) nicht in Eingriff mit den Sicherungsflächen (152) steht.

46. Anhängekupplung nach Anspruch 45, **dadurch gekennzeichnet, dass** der Sicherungsstößel (142) eine Ausnehmung (156) aufweist, in welche der mindestens eine Sicherungskörper (148) in der Entsicherungsstellung eintritt.

47. Anhängekupplung nach einem der Ansprüche 43 bis 46, **dadurch gekennzeichnet, dass** der mindestens eine Sicherungskörper (148) in der Sicherungsstellung des Sicherungsstößels (142) auf schrägen Sicherungsflächen (152) aufliegt, welche über die Sicherungskörper (148) zu einer Kraftwirkung auf den Antriebsstößel (134) in der Einfahrrichtung (84) führen.

48. Anhängekupplung nach Anspruch 47, **dadurch gekennzeichnet, dass** der Sicherungsstößel (142) den mindestens einen Sicherungskörper (148) in ihrer Sicherungsstellung mit einer in Richtung der Sicherungsfläche (152) wirksamen Keilfläche (170) beaufschlagt.

49. Anhängekupplung nach einem der Ansprüche 42 bis 48, **dadurch gekennzeichnet, dass** der Sicherungsstößel (142) relativ zum Antriebsstößel (134) mit einem federelastischen Kraftspeicher (144) in Richtung seiner zur Sicherungsstellung des mindestens einen Sicherungskörpers (148) führenden Stellung beaufschlagt ist.

50. Anhängekupplung nach einem der Ansprüche 39 bis 49, **dadurch gekennzeichnet, dass** die Antriebseinrichtung (130) mit einer Betätigungseinrichtung (160) gekoppelt ist, mit welcher dem auf den Antriebsstößel (134) wirkenden elastischen Kraftspeicher (136) entgegengewirkt werden kann.

51. Anhängekupplung nach Anspruch 50, **dadurch gekennzeichnet, dass** die Betätigungseinrichtung (160) auf den Sicherungsstößel (142) wirkt.

52. Anhängekupplung nach Anspruch 51, **dadurch gekennzeichnet, dass** der Sicherungsstößel (142) bei Erreichen einer einer Entsicherungsstellung des mindestens einen Sicherungskörpers (148) entsprechenden Stellung auf den Antriebsstößel (134) wirkt.

## Claims

1. Trailer coupling for motor vehicles, comprising
a bearing element (20) fixed to the vehicle, a towing element (30) movable in relation to the bearing element (20) fixed to the vehicle from an operative position (A) to a rest position (R) and vice versa and having a coupling ball (34) and a ball neck (32) carrying the coupling ball (34) at a first end (36), and a fixing device (80) having a fixing position and a release position, with which the movable towing element (30) is fixable at least in the operative position (A) by the fixing position to the bearing element (20),
**characterized in that** in the release position the towing element (30) is articulatedly connected to the bearing element (20) by means of a joint (40) which can pivot about three axes, **in that** the joint which can pivot about three axes is a ball-and-socket joint (40), **in that** the ball-and socket-joint (40) comprises a joint ball (54) which is comprised by one of the elements (30, 20), and a joint socket (60) which is comprised by the other one of the elements (20, 30) and receives the joint ball (54), and **in that** the ball-and-socket joint (40) absorbs forces caused by towing loads in the fixing position and transfers these to the bearing element (20).

2. Trailer coupling in accordance with claim 1, **characterized in that** the joint socket (60) engages over the joint ball (54) over a surface area corresponding to more than a hemisphere.

3. Trailer coupling in accordance with claim 2, **characterized in that** the joint socket (60) has an opening (66) from which the joint ball (54) protrudes freely with a spherical cap surface (68).

4. Trailer coupling in accordance with any one of the preceding claims, **characterized in that** the joint socket (60) is comprised of at least two partial bodies (72, 74).

5. Trailer coupling in accordance with any one of the preceding claims, **characterized in that** the joint socket (60) is comprised by the bearing element (20), and **in that** the joint ball (54) is comprised by the towing element (30).

6. Trailer coupling in accordance with claim 5, **characterized in that** the joint ball (54) is disposed at a second end (42) of the ball neck (32).

7. Trailer coupling in accordance with claim 6, **characterized in that** the joint ball (54) is integrally formed on the ball neck (32).

8. Trailer coupling in accordance with any one of claims 1 to 4, **characterized in that** the joint socket (60') is comprised by the towing element (30), and **in that** the joint ball (54') is comprised by the bearing element (20).

9. Trailer coupling in accordance with claim 8, **characterized in that** a portion of the joint socket (60') is integrally formed on the ball neck (32).

10. Trailer coupling in accordance with claim 8 or 9, **characterized in that** the bearing element (20) has a projection (202) on which the joint ball (54') is disposed.

11. Trailer coupling in accordance with claim 10, **characterized in that** the joint ball (54') is integrally disposed on the projection (202).

12. Trailer coupling in accordance with any one of the preceding claims, **characterized in that** the joint (40) having three axes is securable against pivotal movement in all axial directions by the fixing device (80) in the fixing position.

13. Trailer coupling in accordance with claim 12, **characterized in that** the fixing device (80) comprises a wedging element (82) which acts in a blocking manner.

14. Trailer coupling in accordance with any one of the preceding claims, **characterized in that** a wedging element (82) comprises a first wedging surface arrangement (100) of a first wedging surface set (104) and is mounted on one of the elements (20), and **in that** the other one of the elements (30) carries a second wedging surface arrangement (102) of the first wedging surface set (104).

15. Trailer coupling in accordance with claim 14, **characterized in that** the wedging element (82) is provided with at least one first wedging surface arrangement (106) of a second wedging surface set (110), and **in that** one of the elements (20) carries at least one second wedging surface arrangement (108) of the second wedging surface set (110).

16. Trailer coupling in accordance with claim 14 or 15, **characterized in that** each wedging surface set (104, 110) can be made to act in a wedging manner in at least one transverse direction (Q) extending transversely to a drive-in direction (84) of the wedging element (82).

17. Trailer coupling in accordance with claim 16, **characterized in that** each wedging surface set (104, 110) comprises at least one wedging surface whose distance in the transverse direction (Q) from the drive-in direction (84) decreases progressively as its extent progresses in the drive-in direction (84).

18. Trailer coupling in accordance with claim 17, **characterized in that** each wedging surface set (104, 110) comprises two wedging surfaces which can be brought into surface-to-surface abutment with one another.

19. Trailer coupling in accordance with any one of claims 12 to 18, **characterized in that** the joint (40) which can pivot about three axes can be wedged without play by the wedging element (82).

20. Trailer coupling in accordance with claim 19, **characterized in that** each wedging surface set (104, 110) is active in a wedging manner in at least two transverse directions (Q) extending transversely to the drive-in direction (84) of the wedging element (82) and transversely to one another.

21. Trailer coupling in accordance with claim 20, **characterized in that** one of the two transverse directions (Q_{T}) has a component in the direction of a direction of relative movement of the elements (20, 30) in the area of the wedging surface arrangements (100, 102, 106, 108).

22. Trailer coupling in accordance with claim 20 or 21, **characterized in that** one of the two transverse directions has a component (Q_{S}) in the direction perpendicular to a direction of relative movement (Q_{T}) of the elements (20, 30) in the area of the wedging surface arrangements (100, 102, 106, 108).

23. Trailer coupling in accordance with any one of claims 20 to 22, **characterized in that** each wedging surface set (104, 110) comprises at least two wedging surfaces (100, 102, 106, 108) whose distance in the different transverse directions (Q_{T}, Q_{S}) from the drive-in direction decreases progressively as their extent progresses in the drive-in direction.

24. Trailer coupling in accordance with any one of claims 12 to 23, **characterized in that** the wedging element (82) acts on an area of the joint ball (54) lying in the joint socket (60).

25. Trailer coupling in accordance with claim 24, **characterized in that** the wedging element (82) can be made to act between the joint ball (54) and the joint socket (60).

26. Trailer coupling in accordance with claim 24 or 25, **characterized in that** the wedging element (82) blocks a movement of an outer ball surface (56) of the joint ball (54) relative to an inner ball surface (58) of the joint socket (60) in all directions of the surfaces.

27. Trailer coupling in accordance with any one of claims 24 to 26, **characterized in that** the wedging element (82) can be driven into its wedging position with its drive-in direction (84), which extends approximately parallel to a tangential direction (94) in a point of contact (98) of the outer ball surface of the joint ball (54).

28. Trailer coupling in accordance with any one of claims 24 to 27, **characterized in that** the wedging element (82) engages a recess (90) intersecting the joint ball (54) approximately parallel to a tangential direction (94).

29. Trailer coupling in accordance with claim 28, **characterized in that** the recess (90) has wall surfaces which form the second wedging surface arrangement (102) of the first wedging surface set (104).

30. Trailer coupling in accordance with any one of claims 24 to 29, **characterized in that** the joint socket (60) has a recess (92) which passes through the inner ball surface (58) on opposite sides.

31. Trailer coupling in accordance with claim 30, **characterized in that** the recess (92) extends deeper between the points at which it passes through in relation to the inner ball surface (58).

32. Trailer coupling in accordance with any one of claims 29 to 31, **characterized in that** the recess (92) forms the second wedging surface arrangement (108) of the second wedging surface set (110).

33. Trailer coupling in accordance with any one of claims 12 to 23, **characterized in that** the housing (52) forming the joint socket (60) comprises a housing extension (204) which can be brought into abutment with the element (20) carrying the joint ball (54) when the fixing device is active.

34. Trailer coupling in accordance with claim 33, **characterized in that** the wedging element (82) acts in such a way that the wedging element (82) acts upon the housing extension (204) and the other element (20) one in relation to the other.

35. Trailer coupling in accordance with claim 34, **characterized in that** the wedging element (82) acts upon the housing extension (204) and is mounted on the other element (20).

36. Trailer coupling in accordance with any one of the preceding claims, **characterized in that** the wedging element (82) is mounted on the bearing element (20) and is movable in relation to the latter between a wedging position and a release position.

37. Trailer coupling in accordance with any one of the preceding claims, **characterized in that** the wedging element (82) is movable by a linear displacement between the wedging position and the release position.

38. Trailer coupling in accordance with any one of claims 1 to 36, **characterized in that** the wedging element (82') is movable by a rotational movement between the wedging position and the release position.

39. Trailer coupling in accordance with any one of the preceding claims, **characterized in that** the wedging element (82) is movable by a drive device (130) in the drive-in direction (84) into the wedging position.

40. Trailer coupling in accordance with claim 39, **characterized in that** the drive device (130) comprises an elastic force accumulator (136) which acts upon the wedging element (82) in the drive-in direction (84).

41. Trailer coupling in accordance with claim 40, **characterized in that** the drive device (130) comprises a driving ram (134) which is guided in a housing (132) and which is acted upon by the spring-elastic force accumulator (136) and acts upon the wedging element (82).

42. Trailer coupling in accordance with claim 41, **characterized in that** a securing ram (142) is provided in the driving ram (134) and is disposed so as to be acted upon by a spring in relation to the driving ram (134).

43. Trailer coupling in accordance with claim 42, **characterized in that** the position of at least one securing body (148) disposed in a seat (150) in the driving ram (134) is fixable with the securing ram (142).

44. Trailer coupling in accordance with claim 42 or 43, **characterized in that** in a securing position of the securing ram (142), the at least one securing body (148) projects radially over the driving ram (134) and engages behind a securing surface (152) provided on the housing (132).

45. Trailer coupling in accordance with claim 44, **characterized in that** in a release position of the securing ram (142), the at least one securing body (148) is not in engagement with the securing surfaces (152).

46. Trailer coupling in accordance with claim 45, **characterized in that** the securing ram (142) has a recess (156) which the at least one securing body (148) enters in the release position.

47. Trailer coupling in accordance with any one of claims 43 to 46, **characterized in that** in the securing position of the securing ram (142), the at least one securing body (148) rests on inclined securing surfaces (152) which via the securing bodies (148) cause force to be exerted on the driving ram (134) in the drive-in direction (84).

48. Trailer coupling in accordance with claim 47, **characterized in that** the securing ram (142) acts upon the at least one securing body (148) in its securing position with a wedging surface (170) acting in the direction of the securing surface (152).

49. Trailer coupling in accordance with any one of claims 42 to 48, **characterized in that** the securing ram (142) is acted upon in relation to the driving ram (134) with a spring-elastic force accumulator (144) in the direction of its position leading to the securing position of the at least one securing body (148).

50. Trailer coupling in accordance with any one of claims 39 to 49, **characterized in that** the drive device (130) is coupled with an actuating device (160), with which it is possible to counteract the elastic force accumulator (136) acting on the driving ram (134).

51. Trailer coupling in accordance with claim 50, **characterized in that** the actuating device (160) acts on the securing ram (142).

52. Trailer coupling in accordance with claim 51, **characterized in that** the securing ram (142) acts on the driving ram (134) when a position corresponding to a release position of the at least one securing body (148) is reached.

## Revendications

1. Attelage de remorque pour véhicules automobiles comprenant un élément de support (20) fixé sur le véhicule, un élément de remorque (30) mobile par rapport à l'élément de support (20) fixé sur le véhicule depuis une position de travail (A) à une position de repos (R) et inversement, qui comprend une rotule d'attelage (34) et un col de rotule (32) supportant la rotule d'attelage (34) sur une première extrémité (36) et un dispositif de fixation (80) présentant une position de fixation et une position de libération avec lequel l'élément de remorque (30) mobile peut être fixé au moins dans la position de travail (A) par la position de fixation sur l'élément de support (20),
**caractérisé en ce que** l'élément de remorque (30) dans la position de libération est relié à l'élément de support (20) au moyen d'une articulation (40) pouvant pivoter sur trois axes, **en ce que** l'articulation pouvant pivoter sur trois axes est un joint à rotule (40), **en ce que** le joint à rotule (40) présente une rotule (54) compris par l'un des éléments (30, 20) et une cavité d'articulation (60) recevant la rotule (54), compris par l'autre des éléments (30, 20) et **en ce que**, dans la position de fixation, le joint à rotule (40) absorbe des forces occasionnées par les charges de remorque et transfère celles-ci à l'élément de support (20).

2. Attelage de remorque selon la revendication 1, **caractérisé en ce que** la cavité d'articulation (60) engage en recouvrement la rotule (54) par une zone de surface correspondant à plus d'une demi-rotule.

3. Attelage de remorque selon la revendication 2, **caractérisé en ce que** la cavité d'articulation (60) présente une ouverture (66) depuis laquelle la rotule (54) fait saillie librement avec une surface de calotte sphérique (68).

4. Attelage de remorque selon l'une des revendications précédentes, **caractérisé en ce que** la cavité d'articulation (60) est composée d'au moins deux corps partiels (72, 74).

5. Attelage de remorque selon l'une des revendications précédentes, **caractérisé en ce que** la cavité d'articulation (60) est compris par l'élément de support (20) et que la rotule (54) est compris par l'élément de remorque (30).

6. Attelage de remorque selon la revendication 5, **caractérisé en ce que** la rotule (54) est disposée sur une deuxième extrémité (42) du col de rotule (32).

7. Attelage de remorque selon la revendication 6, **caractérisé en ce que** la rotule (54) est formée de manière monobloc sur le col de rotule (32).

8. Attelage de remorque selon l'une des revendications 1 à 4, **caractérisé en ce que** la cavité d'articulation (60') est compris par l'élément de remorque (30) et que la rotule d'articulation (54') est compris par l'élément de support (20).

9. Attelage de remorque selon la revendication 8, **caractérisé en ce qu'**une partie de la cavité d'articulation (60') est formée de manière monobloc sur le col de rotule (32).

10. Attelage de remorque selon la revendication 8 ou 9, **caractérisé en ce que** l'élément de support (20) présente un appendice (202) sur lequel la rotule d'articulation (54') est disposée.

11. Attelage de remorque selon la revendication 10, **caractérisé en ce que** la rotule d'articulation (54') est formée de manière monobloc sur l'appendice (202).

12. Attelage de remorque selon l'une des revendications précédentes, **caractérisé en ce qu'**avec le dispositif de fixation (80) dans la position de fixation, l'articulation à trois axes (40) peut être bloquée contre un mouvement de pivotement dans toutes les directions axiales.

13. Attelage de remorque selon la revendication 12, **caractérisé en ce que** le dispositif de fixation (80) présente un élément de calage (82) agissant de manière à bloquer.

14. Attelage de remorque selon l'une des revendications précédentes, **caractérisé en ce qu'**un élément de calage (82) présente un premier ensemble de faces de calage (100) d'un premier jeu de faces de calage (104) et est positionné sur l'un des éléments (20) et que l'autre des éléments (30) supporte un deuxième ensemble de faces de calage (102) du premier jeu de faces de calage (104).

15. Attelage de remorque selon la revendication 14, **caractérisé en ce que** l'élément de calage (82) est muni au moins d'un premier ensemble de faces de calage (106) d'un deuxième jeu de faces de calage (110) et que l'un des éléments (20) supporte au moins un deuxième ensemble de faces de calage (108) du deuxième jeu de faces de calage (110).

16. Attelage de remorque selon la revendication 14 ou 15, **caractérisé en ce que** chaque jeu de faces de calage (104, 110) peut être amené à agir de manière à caler dans au moins une direction transversale (Q) s'étendant transversalement à une direction d'entrée (84) de l'élément de calage (82).

17. Attelage de remorque selon la revendication 16, **caractérisé en ce que** chaque jeu de faces de calage (104, 110) présente au moins une face de calage avec un prolongement croissant dans la direction d'entrée (84) présentant dans la direction transversale (Q) un écartement de la direction d'entrée (84) se réduisant à mesure.

18. Attelage de remorque selon la revendication 17, **caractérisé en ce que** chaque jeu de faces de calage (104, 110) comprend deux faces de calage pouvant être amenées en appui de manière plane l'une contre l'autre.

19. Attelage de remorque selon l'une des revendications 12 à 18, **caractérisé en ce que** l'articulation (40) pouvant pivoter su r trois axes peut être calée sans jeu par l'élément de calage (82).

20. Attelage de remorque selon l'une des revendications 19, **caractérisé en ce que** chaque jeu de faces de calage (104, 110) est actif de manière à caler dans au moins deux directions transversales (Q) s'étendant transversalement à la direction d'entrée (84) de l'élément de calage (82) et transversalement l'une par rapport à l'autre.

21. Attelage de remorque selon la revendication 20, **caractérisé en ce que** l'une des deux directions transversales présente une composante (Q_{T}) dans le sens d'une direction de mouvement relatif des éléments (20, 30) au niveau des ensembles de faces de calage (100, 102, 106, 108).

22. Attelage de remorque selon la revendication 20 ou 21, **caractérisé en ce que** l'une des deux directions transversales présente une composante (Q_{S}) en direction verticale par rapport à une direction de mouvement relatif (Q_{T}) des éléments (20, 30) au niveau des ensembles de faces de calage (100, 102, 106, 108).

23. Attelage de remorque selon l'une des revendications 20 à 22, **caractérisé en ce que** chaque jeu de faces de calage (104, 110) comprend au moins deux faces de calage (100, 102, 106, 108) présentant un écartement se réduisant à mesure que le prolongement augmente dans la direction d'entrée dans les différentes directions transversales (Q_{T}, Q_{S}).

24. Attelage de remorque selon l'une des revendications 12 à 23, **caractérisé en ce que** l'élément de calage (82) agit sur une zone de la rotule (54) reposant dans la cavité d'articulation (60).

25. Attelage de remorque selon la revendication 24, **caractérisé en ce que** l'élément de calage (82) peut être amené à agir entre la rotule (54) et la cavité d'articulation (60).

26. Attelage de remorque selon la revendication 24 ou 25, **caractérisé en ce que** l'élément de calage (82) bloque un mouvement d'une face externe de rotule (56) de la rotule (54) par rapport à une face interne de rotule (58) de la cavité d'articulation (60) dans toutes les directions des faces.

27. Attelage de remorque selon l'une des revendications 24 à 26, **caractérisé en ce que** l'élément de calage (82) peut être rentré dans la position de calage avec sa direction d'entrée (84) qui est environ parallèle à une direction tangentielle (94) dans un point de contact (98) de la face externe de rotule de la rotule (54).

28. Attelage de remorque selon l'une des revendications 24 à 27, **caractérisé en ce que** l'élément de calage (82) se met en prise dans un évidement (90) coupant la rotule (54) environ parallèlement à une direction tangentielle (94).

29. Attelage de remorque selon la revendication 28, **caractérisé en ce que** l'évidement (90) présente des faces de paroi qui forment le deuxième ensemble de faces de calage (102) du premier jeu de faces de calage (104).

30. Attelage de remorque selon l'une des revendications 24 à 29, **caractérisé en ce que** la cavité d'articulation (60) présente un évidement (92) qui traverse la face interne de rotule (58) sur des côtés opposés.

31. Attelage de remorque selon la revendication 30, **caractérisé en ce que** l'évidement (92) s'étend en profondeur entre les points de traversée par rapport à la face interne de rotule (58).

32. Attelage de remorque selon l'une des revendications 29 à 31, **caractérisé en ce que** l'évidement (92) forme le deuxième ensemble de faces de calage (108) du deuxième jeu de faces de calage (110).

33. Attelage de remorque selon l'une des revendications 12 à 23, **caractérisé en ce que** le boîtier (52) formant la cavité d'articulation (60) présente un épaulement de boîtier (204) qui peut être amené avec l'élément porteur (20) de la rotule (54) en appui avec une direction de fixation active.

34. Attelage de remorque selon la revendication 33, **caractérisé en ce que** l'élément de calage (82) agît de manière à ce que l'élément de calage (82) sollicite l'épaulement de boîtier (204) et l'autre élément (20).

35. Attelage de remorque selon la revendication 34, **caractérisé en ce que** l'élément de calage (82) agit sur l'épaulement de boîtier (204) et est disposé sur l'autre élément (20).

36. Attelage de remorque selon l'une des revendications précédentes, **caractérisé en ce que** l'élément de calage (82) est disposé sur l'élément de support (20) et est mobile par rapport à celui-ci entre une position de calage et une position de libération.

37. Attelage de remorque selon l'une des revendications précédentes, **caractérisé en ce que** l'élément de calage (82) est mobile par un mouvement de coulissement linéaire entre la position de calage et la position de libération.

38. Attelage de remorque selon l'une des revendications 1 à 36, **caractérisé en ce que** l'élément de calage (82') est mobile par un mouvement de rotation entre la position de calage et la position de libération.

39. Attelage de remorque selon l'une des revendications précédentes, **caractérisé en ce que** l'élément de calage (82) est mobile dans la position de calage par un dispositif d'entraînement (130) dans la direction d'entrée (84).

40. Attelage de remorque selon la revendication 39, **caractérisé en ce que** le dispositif d'entraînement (130) présente un accumulateur de force (136) élastique qui sollicite l'élément de calage (82) dans la direction d'entrée (84).

41. Attelage de remorque selon la revendication 40, **caractérisé en ce que** le dispositif d'entraînement (130) présente une tige d'actionnement (134) sollicitée par l'accumulateur de force (136) élastique et agissant sur l'élément de calage (82) qui est dirigée dans un boîtier (132).

42. Attelage de remorque selon la revendication 41, **caractérisé en ce que** dans la tige d'actionnement (134), une tige de verrouillage (142) est prévue, disposée et sollicitée de manière élastique par rapport à celle-ci.

43. Attelage de remorque selon la revendication 42, **caractérisé en ce qu'**avec la tige de verrouillage (142), la position d'au moins un corps de verrouillage (148) disposé dans une réception (150) dans la tige d'actionnement (134) peut être définie.

44. Attelage de remorque selon la revendication 42 ou 43, **caractérisé en ce que** dans une position de verrouillage de la tige de verrouillage (142), l'au moins un corps de verrouillage (148) fait saillie radialement au-dessus la tige d'actionnement (134) et met en prise arrière une surface de verrouillage (152) prévue sur le boîtier (132).

45. Attelage de remorque selon la revendication 44, **caractérisé en ce que** dans une position de déblocage de la tige de verrouillage (142), l'au moins un corps de verrouillage (148) n'est pas en prise avec les faces de verrouillage (152).

46. Attelage de remorque selon la revendication 45, **caractérisé en ce que** la tige de verrouillage (142) présente un évidement (156) dans lequel l'au moins un corps de verrouillage (148) pénètre dans la position de déblocage.

47. Attelage de remorque selon l'une des revendications 43 à 46, **caractérisé en ce que** l'au moins un corps de verrouillage (148) dans la position de verrouillage de la tige de verrouillage (142) repose sur des faces de verrouillage (152) obliques qui conduisent par les corps de verrouillage (148) à l'exercice de force sur la tige d'actionnement (134) dans la direction d'entrée (84).

48. Attelage de remorque selon la revendication 47, **caractérisé en ce que** la tige de verrouillage (142) sollicite l'au moins un corps de verrouillage (148) dans sa position de verrouillage avec une face de calage (170) agissant en direction de la face de verrouillage (152).

49. Attelage de remorque selon l'une des revendications 42 à 48, **caractérisé en ce que** la tige de verrouillage (142) est alimentée par rapport à la tige d'actionnement (134) avec un accumulateur de force (144) élastique dans le sens de sa position conduisant à la position de verrouillage de l'au moins un corps de verrouillage (148).

50. Attelage de remorque selon l'une des revendications 39 à 49, **caractérisé en ce que** le dispositif d'entraînement (130) est couplé à un dispositif d'actionnement (160) avec lequel il est possible de s'opposer à l'accumulateur de force (136) élastique agissant sur la tige d'actionnement (134).

51. Attelage de remorque selon la revendication 50, **caractérisé en ce que** le dispositif d'actionnement (160) agit sur la tige de verrouillage (142).

52. Attelage de remorque selon la revendication 51, **caractérisé en ce que** la tige de verrouillage (142), agit sur la tige d'actionnement (134) lorsqu'une position correspondant à une position de déblocage de l'au moins un corps de verrouillage (148) est atteinte.
